# EUROPEAN PATENT APPLICATION

(11) **EP 4 808 092 A1**
(43) Date of publication of application: **16.09.2026**
(21) Application number: 24908249.6
(22) Date of filing: 10.12.2024
(51) Int. Cl.: H04L 67/54, H04L 67/75, H04L 67/52, H04L 9/40, H04L 67/12, H02J 50/80, G16Y 10/75, G16Y 40/35, H04L 67/125

(54) **ELECTRONIC DEVICE AND METHOD FOR MANAGING INTERNET-OF-THINGS DEVICE**

(30) Priority: 19.12.2023 KR 20230185729; 12.01.2024 KR 20240005224; 04.12.2024 KR 20240178092
(71) Applicant: Samsung Electronics Co., Ltd., Suwon-si, Gyeonggi-do 16677 (KR)
(72) Inventor: CHUNG, Seungtaek, Suwon-si, Gyeonggi-do 16677 (KR)
(74) Representative: Gulde & Partner
(86) International application number: PCT/KR2024/096646
(87) International publication number: WO 2025/135967

(57) **Abstract**

This electronic device may comprise: a communication circuit; a memory for storing instructions; a wireless charging circuit; and a processor. The instructions, when executed by the processor, may instruct the electronic device to: receive a wireless signal including a device ID from a hub device through the wireless charging circuit while the electronic device is being charged from the hub device through the wireless charging circuit; transmit the device ID and location information of the hub device to a server through the communication circuit, wherein the location information of the hub device includes location information of the electronic device; receive information about a connection state between the hub device and the server from the server through the communication circuit; and display, on the basis of the information about the connection state, information related to a location change of the hub device and information related to an online/offline status of at least one of the hub device or one or more IoT devices operatively coupled to the hub device through a display.

## Description

### [Technical Field]

Embodiments of the disclosure relate to an electronic device and a method for managing an internet of things (IoT) device.

### [Background Art]

Services and additional functions provided through user terminals, e.g., the electronic devices such as smartphones, are gradually extending according to the development of technology and user demands. In order to enhance the utility value of such electronic devices and satisfy the desires of various users, communication service providers or electronic device manufacturers are competitively developing electronic devices providing various functions and services. Accordingly, functions provided through the electronic device are also becoming increasingly sophisticated.

Internet of things (IoT) technology may provide intelligent internet technology services that collect and analyze data generated from devices to create new value in human life. Through the convergence and combination of existing Internet technologies and various industries, IoT technology may be applied to fields, such as smart homes, smart buildings, smart cities, smart cars, and smart home appliances.

Various home appliances for user convenience are provided in homes, offices, or lodging establishments. Accordingly, various services are being proposed to make operation or control of home appliances more convenient using IoT technology. For example, a user may control various controlled devices (e.g., home appliances or small electronic devices to which IoT technology is applied) configuring a home network using a personal electronic device (e.g., a smartphone) or a hub. The user may want to receive more various services and utilize a more convenient user experience to control the controlled devices. Accordingly, the development of various techniques for managing controlled devices reflecting the user's intention has been requested.

The information may be provided as related art for the purpose of assisting understanding of the disclosure. No claim or determination is made as to whether any of the foregoing is applicable as background art in relation to the disclosure.

### [Detailed Description of the Invention]

### [Technical Solution]

Embodiments of the disclosure may provide an electronic device and a method for controlling controlled devices (e.g., IoT devices) through a hub device.

Embodiments of the disclosure may provide an electronic device and a method for managing movement of a hub device.

Embodiments of the disclosure may provide an electronic device and a method for managing a status of controlled devices according to location change of a hub device.

The technical problems to be achieved in the disclosure are not limited to the technical problems mentioned above, and other technical problems not mentioned may be clearly understood by those of ordinary skill in the art to which the disclosure belongs from the description below.

An electronic device according to an embodiment of the disclosure may include communication circuitry, memory storing instructions, wireless charging circuitry, and a processor connected with the communication circuitry, the memory and the wireless charging circuitry. The instructions may, when executed by the processor, cause the electronic device to, while the electronic device is being charged from a hub device through the wireless charging circuitry, receive, from the hub device through the wireless charging circuitry, a wireless signal including a device identifier (ID). The instructions may, when executed by the processor, cause the electronic device to transmit the device ID and location information of the hub device to a server through the communication circuitry, and the location information of the hub device may include location information of the electronic device. The instructions may, when executed by the processor, cause the electronic device to receive, from the server through the communication circuitry, information on connection status between the hub device and the server. The instructions may, when executed by the processor, cause the electronic device to, based on the information on the connection status, display, through a display, information related to location change of the hub device and information related to an online/offline of at least one of the hub device or one or more IoT devices operatively coupled with the hub device.

A hub device according to an embodiment of the disclosure may include communication circuitry, memory storing instructions, wireless charging circuitry, and a processor connected with the communication circuitry, the memory and the wireless charging circuitry. The instructions may, when executed by the processor, cause the hub device to, after onboarding to a server, detect, through the communication circuitry, that the hub device is in an offline state in which connection to the server is disconnected. The instructions may, when executed by the processor, cause the hub device to, based on detecting that an electronic device is being charged using a wireless charging function of the hub device, transmit, to the electronic device through the wireless charging circuitry, a first wireless signal including a user ID obtained through the onboarding in the offline state. The instructions may, when executed by the processor, cause the hub device to receive, from the electronic device through the wireless charging circuitry, a second wireless signal including a device ID request. The instructions may, when executed by the processor, cause the hub device to transmit, to the electronic device through the wireless charging circuitry, a third wireless signal including a device ID of the hub device. The instructions may, when executed by the processor, cause the hub device to, while the electronic device is being charged from the hub device through the wireless charging circuitry of the hub device, based on identifying that a user input through an input module of the hub device is received in the offline state, transmit, to the electronic device through the wireless charging circuitry, a fourth wireless signal including information of the user input.

A method of operating an electronic device according to an embodiment of the disclosure may include an operation of, while the electronic device is being charged from a hub device through wireless charging circuitry, receiving, from the hub device through the wireless charging circuitry, a wireless signal including a device identifier (ID). The method may include an operation of transmitting the device ID and location information of the hub device to a server through communication circuitry, and the location information of the hub device may include location information of the electronic device. The method may include an operation of receiving, from the server through the communication circuitry, information on connection status between the hub device and the server. The method may include an operation of, based on the information on the connection status, displaying, through a display, information related to location change of the hub device and information related to an online/offline of at least one of the hub device or one or more IoT devices operatively coupled with the hub device.

A method of operating a hub device according to an embodiment of the disclosure may include an operation of, after onboarding to a server, detecting, through communication circuitry, that the hub device is in an offline state in which connection to the server is disconnected. The method may include an operation of, based on detecting that an electronic device is being charged using a wireless charging function of the hub device, transmitting, to the electronic device through wireless charging circuitry, a first wireless signal including a user ID obtained through the onboarding in the offline state. The method may include an operation of receiving, from the electronic device through the wireless charging circuitry, a second wireless signal including a device ID request. The method may include an operation of transmitting, to the electronic device through the wireless charging circuitry, a third wireless signal including a device ID of the hub device. The method may include an operation of, while the electronic device is being charged from the hub device through the wireless charging circuitry of the hub device, based on identifying that a user input through an input module of the hub device is received in the offline state, transmitting, to the electronic device through the wireless charging circuitry, a fourth wireless signal including information of the user input.

In a non-transitory computer-readable storage medium storing one or more programs according to an embodiment of the disclosure, the one or more programs may include instructions that, when executed by at least one processor of an electronic device, cause the electronic device to, while the electronic device is being charged from a hub device through wireless charging circuitry, receive, from the hub device through the wireless charging circuitry, a wireless signal including a device ID, transmit the device ID and location information of the hub device to a server through communication circuitry, wherein the location information of the hub device includes location information of the electronic device, receive, from the server through the communication circuitry, information on connection status between the hub device and the server, and based on the information on the connection status, display, through a display, information related to location change of the hub device and information related to an online/offline state of at least one of the hub device or one or more IoT devices operatively coupled with the hub device.

### [Brief Description of Drawings]

The forgoing and other aspects, features and advantages of predetermined embodiments of the disclosure will become more apparent from the following description taken in conjunction with the accompanying drawings.
FIG. 1 illustrates an internet-of-things (IoT) system according to various embodiments.
FIG. 2 is a block diagram illustrating an electronic device in a network environment according to various embodiments.
FIG. 3A is a view illustrating a network including controlled devices according to an embodiment of the disclosure.
FIG. 3B is a view illustrating movement of a hub device according to an embodiment of the disclosure.
FIG. 4A is a block diagram illustrating a configuration of an electronic device performing IoT control according to an embodiment of the disclosure.
FIG. 4B is a block diagram illustrating a configuration of a hub device according to an embodiment of the disclosure.
FIG. 5 is a flowchart illustrating an operation of an electronic device notifying movement of a hub device according to an embodiment of the disclosure.
FIG. 6 is a flowchart illustrating an operation of an electronic device managing automation routines according to movement of a hub device according to an embodiment of the disclosure.
FIG. 7 illustrates a sequence diagram illustrating a procedure for notifying movement of a hub device according to an embodiment of the disclosure.
FIG. 8 illustrates a sequence diagram illustrating a procedure for executing an automation routine in an offline state of a hub device according to an embodiment of the disclosure.
FIG. 9 illustrates a sequence diagram illustrating a procedure for keeping a hub device in an online state through tethering according to an embodiment of the disclosure.
FIG. 10 illustrates a sequence diagram illustrating a procedure for notifying change of an automation routine at a hub device according to an embodiment of the disclosure.
FIG. 11 illustrates a sequence diagram illustrating a procedure for activating or deactivating an automation routine per location according to an embodiment of the disclosure.
FIG. 12 illustrates a sequence diagram illustrating a procedure for setting an automation routine per location according to an embodiment of the disclosure.
FIG. 13A, FIG. 13B, FIG. 13C, and FIG. 13D illustrate an example of a user interface notifying offline of a hub device according to an embodiment of the disclosure.
FIG. 14A, FIG. 14B, FIG. 14C, and FIG. 14D illustrate an example of a user interface notifying deactivation of an automation routine per location according to an embodiment of the disclosure.

### [Mode for Carrying out the Invention]

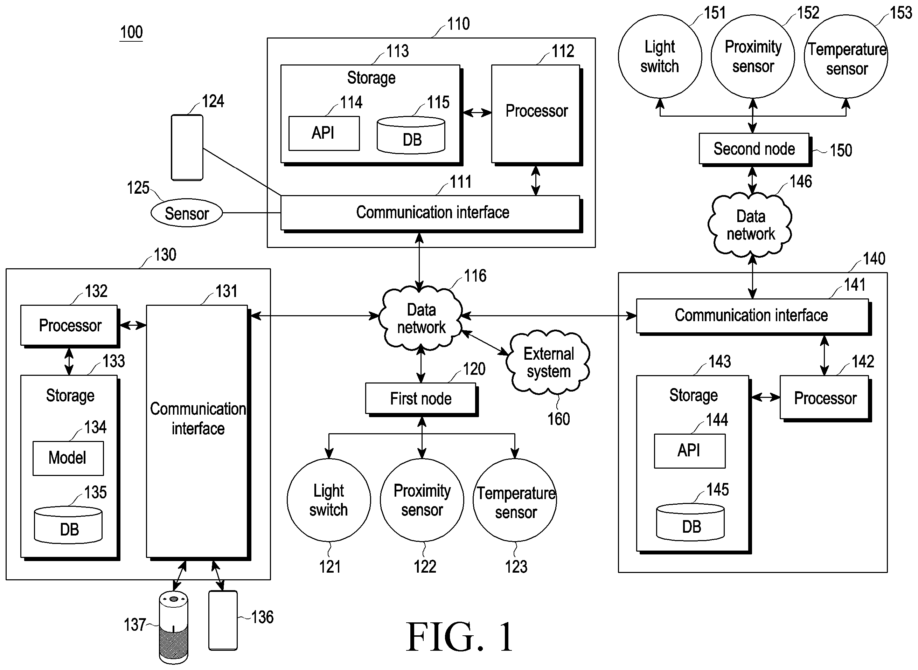

FIG. 1 illustrates an internet-of-things (IoT) system 100 according to various embodiments. At least some of the components shown in FIG. 1 may be omitted, or at least one component not shown may be added.

Referring to FIG. 1, according to an embodiment, the IoT system 100 includes a plurality of electronic devices connectable to a data network 116 or 146. For example, the IoT system 100 may include at least one of a first IoT server 110, a first node 120, a voice assistance server 130, a second IoT server 140, a second node 150, or devices 121, 122, 123, 124, 125, 136, 137, 151, 152, and 153.

According to an embodiment, the first IoT server 110 may include at least one of a communication interface 111, a processor 112, or a storage unit 113. The second IoT server 140 may include at least one of a communication interface 141, a processor 142, or a storage unit 143. In the disclosure, the "IoT server" may remotely control and/or monitor one or more devices (e.g., the devices 121, 122, 123, 124, 125, 136, 137, 151, 152, and 153) directly without a relay device, or via a relay device (e.g., the first node 120 or the second node 150), based on, e.g., a data network (e.g., the data network 116 or data network 146). Here, "device" refers to, e.g., a sensor, home appliance, office electronic device, or processing device placed (or positioned) in a local environment, such as a home, office, factory, building, external place, or other types of sites, and is not limited to a specific type. A device that receives a control command and performs an operation corresponding to the control command may be referred to as a "target device." The IoT server may be referred to as a central server in light that it selects a target device from among a plurality of devices and provides control commands.

According to an embodiment, the first IoT server 110 may communicate with devices 121, 122, and 123 via the data network 116. The data network 116 may mean a network for remote communication, such as, e.g., the Internet or a computer network (e.g., a local area network (LAN) or wide area network (WAN)), or may encompass cellular networks.

According to an embodiment, the first IoT server 110 may connect to the data network 116 via the communication interface 111. The communication interface 111 may include a communication device (or communication module) for supporting communication of the data network 116 and may be implemented as a single integrated component (e.g., a single chip) or as a plurality of separate components (e.g., multiple chips). The first IoT server 110 may communicate with the devices 121, 122, and 123 via the first node 120. The first node 120 may receive data from the first IoT server 110 via the data network 116 and transmit the received data to at least some of the devices 121, 122, and 123. The first node 120 may receive data from at least some of the devices 121, 122, and 123 and transmit the received data to the first IoT server 110 via the data network 116. The first node 120 may function as a bridge between the data network 116 and the devices 121, 122, and 123. Although FIG. 1 illustrates only one first node 120, this is merely an example, and embodiments of the disclosure are not limited thereto.

In the disclosure, "node" may refer to an edge computing system or a hub device. According to an embodiment, the first node 120 may support wired and/or wireless communication of the data network 116 and may support wired and/or wireless communication with the devices 121, 122, and 123. For example, the first node 120 may connect to the devices 121, 122, and 123 via a short-range communication network, e.g., at least one of Bluetooth, Wi-Fi, Wi-Fi direct, Z-wave, Zig-bee, INSETEON, X10, or infrared data association (IrDA), but the type of communication is not limited to a specific one. The first node 120 may be placed (or positioned) in an environment, such as, e.g., a home, office, factory, building, external place, or other types of sites. Thus, the devices 121, 122, and 123 may be monitored and/or controlled by a service provided by the first IoT server 110, and the devices 121, 122, and 123 may not be required to have the capability of full network communication (e.g., Internet communication) for direct connection to the first IoT server 110. Although in the illustrated example, the devices 121, 122, and 123 are implemented as electronic devices in a home environment, such as, e.g., a lamp switch, proximity sensor, and temperature sensor, this is merely an example, and the devices 121, 122, and 123 are not limited thereto.

According to an embodiment, the first IoT server 110 may also support direct communication with devices 124 and 125. Here, "direct communication" may mean communication that does not rely on a relay device, such as the first node 120. For example, "direct communication" may mean communication via, e.g., a cellular communication network and/or data network.

According to an embodiment, the first IoT server 110 may transmit control commands to at least some of devices 121, 122, 123, 124, and 125. Here, "control command" may mean data to trigger a controllable device to perform a specific operation. The specific operation may be an operation performed by a device, including outputting, sensing, reporting, or managing (e.g., deleting or creating) information, but not limited thereto. For example, the processor 112 may obtain information (or a request) for creating a control command from an outside (e.g., at least some of the voice assistance server 130, second IoT server 140, external system 160, or devices 121, 122, 123, 124, and 125) and create a control command based on the obtained information. Alternatively, the processor 112 may create a control command based on a designated condition being met by a result of monitoring of at least some of the devices 121, 122, 123, 124, and 125. The processor 112 may control the communication interface 111 to transmit the control command to the target device.

According to an embodiment, the processor 112, processor 132, or processor 142 may be implemented as a combination of one or more of general-purpose processors, such as central processing units (CPUs), digital signal processors (DSPs), application processors (APs), communication processors (CPs), graphics dedicated processors, such as graphical processing units (GPUs) or vision processing units (VPUs), or artificial intelligence dedicated processors, such as neural processing units (NPUs). The above-described processing units are merely examples. It will be easily appreciated by one of ordinary skill in the art that the processor 112 is not limited thereto as long as it is a computational means capable of executing instructions stored in the memory 113 and outputting the results of execution.

According to an embodiment, the processor 112 may configure a web-based interface based on the API 114 or may expose the resource managed by the first IoT server 110 to the outside. For example, the web-based interface may support communication between the first IoT server 110 and an external web service. For example, the processor 112 may allow the external system 160 to control and/or access the devices 121, 122, and 123. For example, the external system 160 may be an independent (or standalone) system that is not associated with the system 100 or is not part of the system 100. The external system 160 may be, e.g., an external server or website. However, access, by the external system 160, to the devices 121, 122, and 123 or the resource of the first IoT server 110 needs to be secured. According to an embodiment, for automated applications, the processor 112 may expose the API (114)-based API end point (e.g., universal resource locator (URL)) to the outside. As set forth above, the first IoT server 110 may transfer the control command to the target device among the devices 121, 122, and 123. The description of the communication interface 141, processor 142, the API 144 of the storage unit 143, and the database 145 of the second IoT server 140 may be substantially the same as the description of the communication interface 111, processor 112, the API 114 of the storage unit 113, and the database 115 of the first IoT server 110. The description of the second node 150 may be substantially the same as the description of the first node 120. The second IoT server 140 may transfer the control command to the target device among the devices 151, 152, and 153. The first IoT server 110 and the second IoT server 140 may be operated by the same service provider in an embodiment but, in another embodiment, the servers 110 and 140, respectively, may be operated by different service providers.

According to an embodiment, the voice assistance server 130 may transmit and receive data to/from the first IoT server 110 via the data network 116. According to an embodiment, the voice assistance server 130 may include at least one of the communication interface 131, processor 132, or storage unit 133. The communication interface 131 may communicate with a smartphone 136 or AI speaker 137 via a data network (not shown) and/or cellular network (not shown). The smartphone 136 or AI speaker 137 may include a microphone and may obtain a user voice, convert the user voice into a voice signal, and transmit the voice signal to the voice assistance server 130. The processor 132 may receive the voice signal from the smartphone 136 or AI speaker 137 via the communication interface 131. The processor 132 may process the received voice signal based on a stored model 134. The processor 132 may create (or identify) a control command using a processing result, based on information stored in the database 135. According to an embodiment, the storage unit 113, 133, or 143 may include, but is not limited to, at least one non-transitory type of storage medium of flash memory types, hard disk types, multimedia card micro types, card-type memories (e.g., secure digital (SD) or extreme digital (XD) memory cards), random access memories (RAMs), static random access memories (SRAMs), read-only memories (ROMs), electrically erasable programmable read-only memories (EEPROMs), programmable read-only memories (PROMs), magnetic memories, magnetic disks, or optical discs.

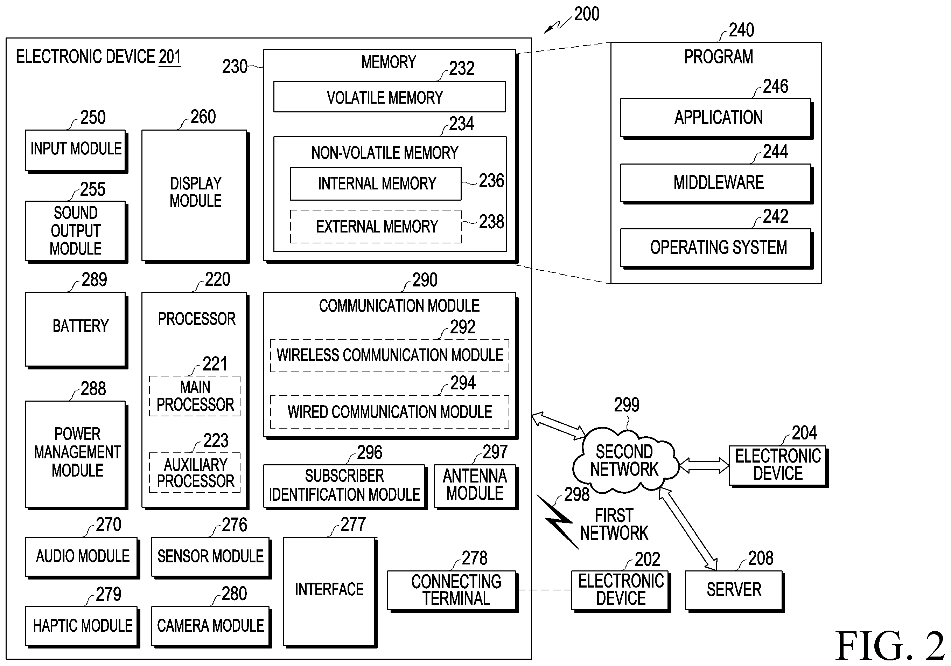

In various embodiments, at least one device (e.g., the device 124) communicating with the first IoT server 110 may be a smartphone (e.g., the electronic device 201 of FIG. 2) in a network environment.

FIG. 2 is a block diagram illustrating an electronic device 201 in a network environment 200 according to various embodiments.

Referring to FIG. 2, the electronic device 201 in the network environment 200 may communicate with at least one of an electronic device 202 via a first network 298 (e.g., a short-range wireless communication network), or an electronic device 204 or a server 208 via a second network 299 (e.g., a long-range wireless communication network). According to an embodiment, the electronic device 201 may communicate with the electronic device 204 via the server 208. According to an embodiment, the electronic device 201 may include a processor 220, memory 230, an input module 250, a sound output module 255, a display module 260, an audio module 270, a sensor module 276, an interface 277, a connecting terminal 278, a haptic module 279, a camera module 280, a power management module 288, a battery 289, a communication module 290, a subscriber identification module (SIM) 296, or an antenna module 297. In an embodiment, at least one (e.g., the connecting terminal 278) of the components may be omitted from the electronic device 201, or one or more other components may be added in the electronic device 201. According to an embodiment, some (e.g., the sensor module 276, the camera module 280, or the antenna module 297) of the components may be integrated into a single component (e.g., the display module 260).

The processor 220 may execute, for example, software (e.g., the program 240) to control at least one other component (e.g., a hardware or software component) of the electronic device 201 coupled with the processor 220, and may perform various data processing or computation. According to an embodiment, as at least part of the data processing or computation, the processor 220 may store a command or data received from another component (e.g., the sensor module 276 or the communication module 290) in volatile memory 232, process the command or the data stored in the volatile memory 232, and store resulting data in non-volatile memory 234. According to an embodiment, the processor 220 may include a main processor 221 (e.g., a central processing unit (CPU) or an application processor (AP)), or an auxiliary processor 223 (e.g., a graphics processing unit (GPU), a neural processing unit (NPU), an image signal processor (ISP), a sensor hub processor, or a communication processor (CP)) that is operable independently from, or in conjunction with, the main processor 221. For example, when the electronic device 201 includes the main processor 221 and the auxiliary processor 223, the auxiliary processor 223 may be configured to use lower power than the main processor 221 or to be specified for a designated function. The auxiliary processor 223 may be implemented as separate from, or as part of the main processor 221.

The auxiliary processor 223 may control at least some of functions or states related to at least one component (e.g., the display module 260, the sensor module 276, or the communication module 290) among the components of the electronic device 201, instead of the main processor 221 while the main processor 221 is in an inactive (e.g., sleep) state, or together with the main processor 221 while the main processor 221 is in an active state (e.g., executing an application). According to an embodiment, the auxiliary processor 223 (e.g., an image signal processor or a communication processor) may be implemented as part of another component (e.g., the camera module 280 or the communication module 290) functionally related to the auxiliary processor 223. According to an embodiment, the auxiliary processor 223 (e.g., the neural processing unit) may include a hardware structure specified for artificial intelligence model processing. The artificial intelligence model may be generated via machine learning. Such learning may be performed, e.g., by the electronic device 201 where the artificial intelligence is performed or via a separate server (e.g., the server 208). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 230 may store various data used by at least one component (e.g., the processor 220 or the sensor module 276) of the electronic device 201. The various data may include, for example, software (e.g., the program 240) and input data or output data for a command related thereto. The memory 230 may include the volatile memory 232 or the non-volatile memory 234.

The program 240 may be stored in the memory 230 as software, and may include, for example, an operating system (OS) 242, middleware 244, or an application 246.

The input module 250 may receive a command or data to be used by other component (e.g., the processor 220) of the electronic device 201, from the outside (e.g., a user) of the electronic device 201. The input module 250 may include, for example, a microphone, a mouse, a keyboard, keys (e.g., buttons), or a digital pen (e.g., a stylus pen).

The sound output module 255 may output sound signals to the outside of the electronic device 201. The sound output module 255 may include, for example, a speaker or a receiver. The speaker may be used for general purposes, such as playing multimedia or playing recordings. The receiver may be used for receiving incoming calls. According to an embodiment, the receiver may be implemented as separate from, or as part of the speaker.

The display module 260 may visually provide information to the outside (e.g., a user) of the electronic device 201. The display module 260 may include, for example, a display, a hologram device, or a projector and control circuitry to control a corresponding one of the display, hologram device, and projector. According to an embodiment, the display module 260 may include a touch sensor configured to detect a touch, or a pressure sensor configured to measure the intensity of a force generated by the touch.

The audio module 270 may convert a sound into an electrical signal and vice versa. According to an embodiment, the audio module 270 may obtain the sound via the input module 250, or output the sound via the sound output module 255 or a headphone of an external electronic device (e.g., an electronic device 202) directly (e.g., wiredly) or wirelessly coupled with the electronic device 201.

The sensor module 276 may detect an operation state (e.g., power or temperature) of the electronic device 201 or an external environmental state (e.g., the user's state), and then generate an electrical signal or data value corresponding to the detected state. According to an embodiment, the sensor module 276 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 277 may support one or more specified protocols to be used for the electronic device 201 to be coupled with the external electronic device (e.g., the electronic device 202) directly (e.g., wiredly) or wirelessly. According to an embodiment, the interface 277 may include, for example, a high definition multimedia interface (HDMI), a universal serial bus (USB) interface, a secure digital (SD) card interface, or an audio interface.

A connecting terminal 278 may include a connector via which the electronic device 201 may be physically connected with the external electronic device (e.g., the electronic device 202). According to an embodiment, the connecting terminal 278 may include, for example, an HDMI connector, a USB connector, an SD card connector, or an audio connector (e.g., a headphone connector).

The haptic module 279 may convert an electrical signal into a mechanical stimulus (e.g., a vibration or motion) or electrical stimulus which may be recognized by a user via his tactile sensation or kinesthetic sensation. According to an embodiment, the haptic module 279 may include, for example, a motor, a piezoelectric element, or an electric stimulator.

The camera module 280 may capture a still image or moving images. According to an embodiment, the camera module 280 may include one or more lenses, image sensors, image signal processors, or flashes.

The power management module 288 may manage power supplied to the electronic device 201. According to an embodiment, the power management module 288 may be implemented as at least part of, for example, a power management integrated circuit (PMIC).

The battery 289 may supply power to at least one component of the electronic device 201. According to an embodiment, the battery 289 may include, for example, a primary cell which is not rechargeable, a secondary cell which is rechargeable, or a fuel cell.

The communication module 290 may support establishing a direct (e.g., wiredly) communication channel or a wireless communication channel between the electronic device 201 and the external electronic device (e.g., the electronic device 202, the electronic device 204, or the server 208) and performing communication via the established communication channel. The communication module 290 may include one or more communication processors that are operable independently from the processor 220 (e.g., the application processor (AP)) and supports a direct (e.g., wiredly) communication or a wireless communication. According to an embodiment, the communication module 290 may include a wireless communication module 292 (e.g., a cellular communication module, a short-range wireless communication module, or a global navigation satellite system (GNSS) communication module) or a wired communication module 294 (e.g., a local area network (LAN) communication module or a power line communication (PLC) module). A corresponding one of these communication modules may communicate with the external electronic device 204 via a first network 298 (e.g., a short-range communication network, such as Bluetooth^{™}, wireless-fidelity (Wi-Fi) direct, or infrared data association (IrDA)) or a second network 299 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 292 may identify or authenticate the electronic device 201 in a communication network, such as the first network 298 or the second network 299, using subscriber information (e.g., international mobile subscriber identity (IMSI)) stored in the subscriber identification module 296.

The wireless communication module 292 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 292 may support a high-frequency band (e.g., the mmWave band) to achieve, e.g., a high data transmission rate. The wireless communication module 292 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 292 may support various requirements specified in the electronic device 201, an external electronic device (e.g., the electronic device 204), or a network system (e.g., the second network 299). According to an embodiment, the wireless communication module 292 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 297 may transmit or receive a signal or power to or from the outside (e.g., the external electronic device). According to an embodiment, the antenna module 297 may include one antenna including a radiator formed of a conductor or conductive pattern formed on a substrate (e.g., a printed circuit board (PCB)). According to an embodiment, the antenna module 297 may include a plurality of antennas (e.g., an antenna array). In this case, at least one antenna appropriate for a communication scheme used in a communication network, such as the first network 298 or the second network 299, may be selected from the plurality of antennas by, e.g., the communication module 290. The signal or the power may then be transmitted or received between the communication module 290 and the external electronic device via the selected at least one antenna. According to an embodiment, other parts (e.g., radio frequency integrated circuit (RFIC)) than the radiator may be further formed as part of the antenna module 297.

According to various embodiments, the antenna module 297 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 201 and the external electronic device 204 via the server 208 coupled with the second network 299. The external electronic devices 202 or 204 each may be a device of the same or a different type from the electronic device 201. According to an embodiment, all or some of operations to be executed at the electronic device 201 may be executed at one or more of the external electronic devices 202, 204, or 208. For example, if the electronic device 201 should perform a function or a service automatically, or in response to a request from a user or another device, the electronic device 201, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 201. The electronic device 201 may provide the outcome, with or without further processing of the outcome, as at least part of a reply to the request. To that end, a cloud computing, distributed computing, mobile edge computing (MEC), or client-server computing technology may be used, for example. The electronic device 201 may provide ultra low-latency services using, e.g., distributed computing or mobile edge computing. In another embodiment, the external electronic device 204 may include an Internet-of-things (IoT) device. The server 208 may be an intelligent server using machine learning and/or a neural network. According to an embodiment, the external electronic device 204 or the server 208 may be included in the second network 299. The electronic device 201 may be applied to intelligent services (e.g., smart home, smart city, smart car, or health-care) based on 5G communication technology or IoT-related technology.

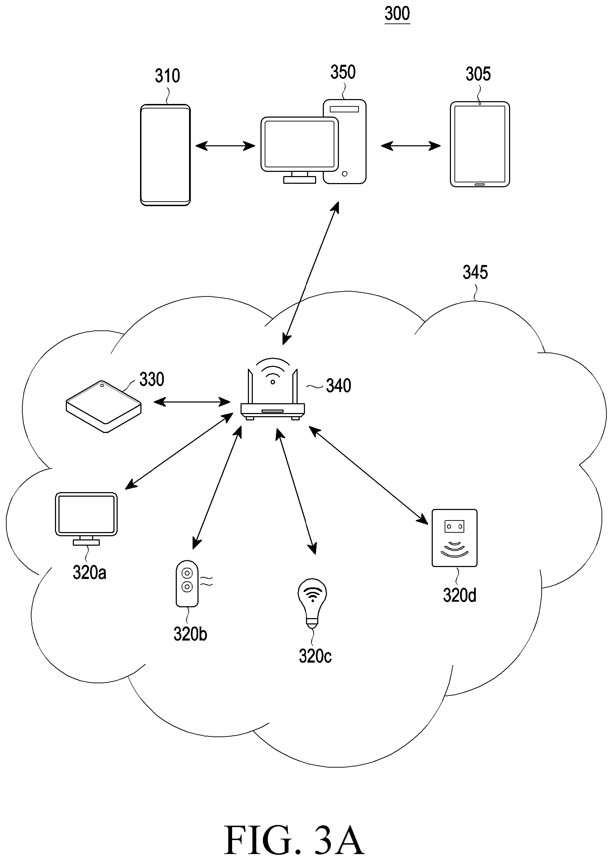

FIG. 3A is a view illustrating a network including controlled devices according to an embodiment of the disclosure.

Referring to FIG. 3A, a network 300 (e.g., IoT network) may include a server 350 operating as an IoT cloud, an electronic device 310 (e.g., the electronic device 201) capable of communicating with the server 350 through long-range wireless communication (e.g., the second network 299), and one or more controlled devices (e.g., IoT devices 320a, 320b, 320c, and 320d) within a local network 345 (e.g., home) that support IoT technology and may connect to an access point (AP) 340 using short-range wireless communication (e.g., Bluetooth or Wi-Fi) and communicate with the server 350 through the AP 350.

A hub device 330 (e.g., a wireless charger, TV, home automation panel, personal computer (PC), smartphone, or tablet) configured to manage connection and status of the IoT devices 320a, 320b, 320c, and 320d may be included in the local network 345. The hub device 330 may be onboarded by being registered with the server 350 similar to the IoT devices 320a, 320b, 320c, and 320d, connect to the AP 340 through short-range wireless communication (e.g., Bluetooth or Wi-Fi), and communicate with the server 350 through the AP 340. The hub device 330 may allow at least one of the IoT devices 320a, 320b, 320c, and 320d to connect to the server 350 through the AP 340. The hub device 330 may directly control at least one (e.g., the IoT devices 320c, 320d) of the IoT devices 320a, 320b, 320c, and 320d (e.g., without going through the electronic device 310, the AP 340, or the server 350).

The electronic device 310 may communicate with (e.g., control or manage) the IoT devices 320a, 320b, 320c, 320d through the server 350, through long-range wireless communication (e.g., the second network 299), or through short-range wireless communication (e.g., the first network 298).

The IoT devices 320a, 320b, 320c, 320d may be controlled (e.g., report status and/or execute a designated action) by a remote command (e.g., a control command from the electronic device 310, the server 350, or the hub device 330), and may include, e.g., at least one of a television, an air conditioner, an air purifier, a refrigerator, a washer, a bulb, a security camera, a sensor, or a window treatment. The IoT devices 320a, 320b, 320c, 320d may communicate with the electronic device 310 through the hub device 330 or the AP 340 within the local network 345, communicate with the electronic device 310 through the server 350, directly communicate with the electronic device 310 (e.g., without going through the server 350, the AP 340, or the hub device 330), or directly communicate with the hub device 330 (e.g., without going through the server 350, the AP 340, or the electronic device 310).

In an embodiment, the IoT devices 320a, 320b, 320c, 320d may be configured to communicate with the electronic device 310 or the hub device 330 through long-range wireless communication (e.g., the second network 299) or through short-range wireless communication (e.g., the first network 298). In an embodiment, the IoT devices 320a, 320b, 320c, 320d may be configured to communicate with the server 350 through long-range wireless communication (e.g., the second network 299) or through short-range wireless communication (e.g., the first network 298).

In an embodiment, the electronic device 310 may be, e.g., a personal electronic device such as a smartphone or a tablet, or an electronic device having a display and a user interface such as a television or a control console. In an embodiment, the electronic device 310 may be connected (e.g., paired) with at least one external electronic device 305 (e.g., a wearable device such as a tablet or a smartwatch) configured to execute at least some of functions of the electronic device 310 to be described below directly or through the electronic device 310.

In an embodiment, the electronic device 310 may discover at least one (e.g., the IoT device 320a) of the IoT devices 320a, 320b, 320c, 320d or a second electronic device (e.g., the hub device 330), and may execute a registration procedure (e.g., onboarding) for registering the discovered IoT device 320a or the hub device 330 with the server 350. The IoT devices 320a, 320b, 320c, 320d and the hub device 330 may be registered with the server 350 to be associated with a user account. The electronic device 310 may monitor and control a status (e.g., a connection status) of the IoT devices 320a, 320b, 320c, 320d and the hub device 330 registered with the server 350 based on the user account.

The electronic device 310 may check the status of the IoT devices 320a, 320b, 320c, 320d and the hub device 330 that the user will use for the IoT service, or control the IoT devices 320a, 320b, 320c, 320d and the hub device 330 (e.g., transmit a control command instructing to execute a specific action or set an automation routine). In an embodiment, the automation routine may include an execution condition and an action associated with at least one IoT device of the IoT devices 320a, 320b, 320c, 320d. In an embodiment, the electronic device 310 may create at least one automation routine associated with at least one of the IoT devices 320a, 320b, 320c, 320d. Information of the created at least one automation routine may be stored in the server 350 and/or the hub device 330.

The electronic device 310 may be an owner device of the local network 350. At least one member device (e.g., the external electronic device 305, a tablet, or a wearable device such as a smartwatch) including at least some capabilities and/or control authority of the electronic device 310 may be included in the network 300. In an embodiment, the member device (e.g., the external electronic device 305) may not execute a registration procedure for the IoT devices 320a, 320b, 320c, 320d or the hub device 330, but may execute a function of checking or controlling the status of the IoT devices 320a, 320b, 320c, 320d and/or the hub device 330 registered with the server 350. In an embodiment, the member device (e.g., the external electronic device 305) may be associated with the same user account as the electronic device 310, the IoT devices 320a, 320b, 320c, 320d and/or the hub device 330.

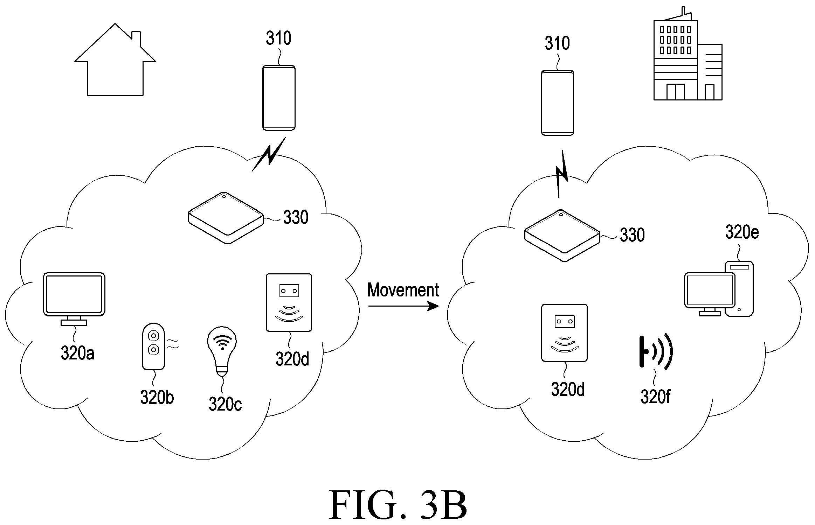

FIG. 3B is a view illustrating movement of a hub device according to an embodiment of the disclosure.

Referring to FIG. 3B, the hub device 330 may be used as a hub at a fixed location (e.g., the local network 345 or a home 360) when connected to the AP 340. For example, the hub device 330 may include a wireless charger (e.g., the wireless charging circuitry 418), and the user may move while carrying the hub device 330 to use the wireless charging function or the hub function at a new location (e.g., an office 365).

At least one IoT device (e.g., the IoT device 320a and/or 320b) of the IoT devices 320a, 320b, 320c, 320d may be connected to the server 350 through the AP 340 and may be controlled by the electronic device 310, the server 350, and/or the hub device 330. At least one IoT device (e.g., the IoT device 320c or 320d) of the IoT devices 320a, 320b, 320c, 320d may be a hub-connected type device directly connected with the hub device 330 (e.g., through Bluetooth, Wi-Fi, or Zigbee). The IoT device 320c or 320d may be controlled by the hub device 330 according to a request from the electronic device 310 and/or the server 350. When the hub device 330 enters a state in which connection to the server 350 is disconnected (e.g., an offline state) as the hub device 330 leaves the local network 345, at least one IoT device (e.g., the hub-connected IoT device 320c or 320d) may also enter the offline state.

In an embodiment, the user may bring the hub device 330 to a new location (e.g., the office 365) other than the local network 345 (e.g., the home 360) when traveling or on a business trip. When the hub device 330 goes offline as it moves to the office 365, information or status of at least one IoT device (e.g., the hub-connected IoT device 320c or 320d) may not be updated to the server 350, and thus the user (e.g., the electronic device 310 or the external electronic device 305) may not intuitively know for what reason the hub device 330 or at least one IoT device (e.g., the hub-connected IoT device 320c or 320d) has gone offline.

In an embodiment, when the hub device 330 including the wireless charging function enters a state in which connection to the server 350 is disconnected (e.g., an offline state) as the hub device 330 leaves the local network 345, the electronic device 310 may report to the server 350 to utilize a location of the electronic device 310 identified by the electronic device 310 while wirelessly charging through the hub device 330 (e.g., geolocation, geo) as a location of the hub device 330. The electronic device 310 may identify a geographic location of the electronic device 310 (e.g., a routing address or latitude and longitude) through a global positioning system (GPS) or a long-range wireless communication system.

In an embodiment, the server 330 may update a connection status (e.g., an online state or an offline state) of the IoT devices 320a, 320b, 320c, and 320d using the location of the hub device 310 (e.g., a geographic location of the electronic device 310 being charged). In an embodiment, the server 330 may notify devices associated with the user account (e.g., the electronic device 310 and/or the external electronic device 305) that the IoT devices 320a, 320b, 320c, and 320d have gone offline due to movement of the hub device 310. In an embodiment, the server 330 may notify devices associated with the user account (e.g., the electronic device 310 and/or the external electronic device 305) that an automation routine designated to the hub device 310 may be deactivated due to movement of the hub device 310.

In an embodiment, the hub device 330 may include an input module (e.g., the input module 420) including at least one button, and may execute a pre-designated automation routine based on identifying a user input (e.g., button pressed or button double pressed) through the input module 420. In an embodiment, the hub device 330 may directly transmit a control command to at least one IoT device according to the designated automation routine, or may request the server 350 to execute the designated automation routine. When the hub device 330 including the wireless charging function enters a state in which connection to the server 350 is disconnected (e.g., an offline state) as the hub device 330 leaves the local network 345, the electronic device 310 may receive, through the wireless charging circuitry 408 of the electronic device 310 in contact (or proximity) with the hub device 330, a wireless signal including information of a user input (e.g., button pressed or button double pressed) detected by the hub device 330 while wirelessly charging through the hub device 330.

In an embodiment, the electronic device 310 may transmit information of the user input received through the wireless signal to the server 350, thereby causing the server 350 to execute an automation routine designated for the user input.

In an embodiment, when the hub device 330 including the wireless charging function enters a state in which connection to the server 350 is disconnected (e.g., an offline state) as the hub device 330 leaves the local network 345, the electronic device 310 may provide a wireless communication connection (e.g., a tethering connection) between the electronic device 310 and the hub device 330 so that the hub device 330 may access an external network (e.g., the Internet) through the electronic device 310 while wirelessly charging through the hub device 330. For example, when the electronic device 310 operates as a mobile hotspot, the hub device 330 may connect with the server 350 through the tethering connection between the electronic device 310 and the hub device 330 and may enter the online state.

In an embodiment, the user may bring at least one IoT device (e.g., the hub-connected IoT device 320d) connected to the hub device 330 to the office 365 together with the hub device 330. The hub device 330 may manage the status of the IoT device 320d or control the IoT device 320d while maintaining connection to the IoT device 320d. The hub device 330 may notify connection status information (e.g., online state) and a new geographic location (e.g., the office 365) of the IoT device 320d to the electronic device 310 or the server 350. Based on the notification, the electronic device 310 or the server 350 may deactivate an automation routine at a previous location (e.g., home) associated with the IoT device 320d.

In an embodiment, the hub device 330 may enter the online state by connecting with the server 350 through the tethering connection of the electronic device 310 or a new AP (not illustrated) at a new location (e.g., the office 365) to which the hub device 330 has moved. In an embodiment, the hub device 330 may be directly connected with a new IoT device (e.g., the IoT devices 320d, 320e) at a new location (e.g., the office 365) (e.g., through Bluetooth, Wi-Fi, or Zigbee). In an embodiment, the IoT devices 320d, 320e may be hub-connected IoT devices. The electronic device 310 may create an automation routine associated with one or more IoT devices (e.g., the IoT device 320d and/or the IoT devices 320d, 320e) connectable with the hub device 330 at a new location (e.g., the office 365).

In an embodiment, the electronic device 310 may create automation routines per location where the hub device 330 is located (e.g., an automation routine for home and an automation routine for office) respectively, and transmit a routine creation request to the hub device 330 and/or the server 350. For example, the automation routine for home may include an execution condition and a control command associated with the IoT devices 320a, 320b, 320c, 320d located at the home (e.g., the local network 345). For example, the automation routine for office may include an execution condition and a control command associated with the IoT devices 320d, 320f, 320e located at the home (e.g., the local network 345).

In an embodiment, the hub device 330 and/or the server 350 may execute the corresponding automation routine per location according to the current location of the hub device 330. In an embodiment, information on the current location of the hub device 330 may be delivered to the server 350 from the electronic device 310 wirelessly charging through the hub device 330 or from the hub device 330. In an embodiment, the hub device 330 and/or the server 350 may execute different automation routines according to the current location of the hub device 330 for the same user input (e.g., button pressed or button double pressed) received by the hub device 330.

In an embodiment, the electronic device 310, the hub device 330, or the server 350 may change an operation mode of the IoT devices 320a, 320b, 320c, 320d associated with the hub device 330 according to location movement of the hub device 330. In an embodiment, based on identifying that the hub device 330 leaves the home (e.g., the local network 345), the electronic device 310 may manage the IoT devices 320a, 320b, 320c, 320d located at the home in a designated power-saving mode and/or a designated enhanced security mode.

In an embodiment, the electronic device 310, the hub device 330, or the server 350 may activate or deactivate at least one of automation routines designated to the hub device 330 according to location movement of the hub device 330. In an embodiment, based on identifying that the hub device 330 leaves the home (e.g., the local network 345), the electronic device 310, the hub device 330, or the server 350 may deactivate at least one automation routine associated with at least one of the IoT devices 320a, 320b, 320c, 320d located at the home. In an embodiment, among the IoT devices 320a, 320b, 320c, 320d located at the home, an automation routine associated with at least one IoT device that has entered the online state through another hub device or network connection may remain activated without being deactivated.

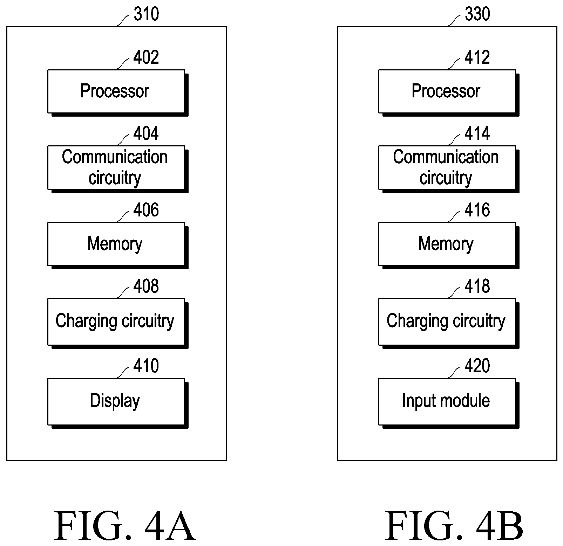

FIG. 4A is a block diagram illustrating a configuration of an electronic device performing IoT control according to an embodiment of the disclosure.

Referring to FIG. 4A, the electronic device 310 may be a device implementing an IoT service (e.g., an event-based IoT service) in an IoT network (e.g., the network 300). For example, the IoT network may be a smart home network, and the IoT service may be an automation service. The electronic device 310 may include a processor 402 (e.g., the processor 220), communication circuitry 404 (e.g., the communication module 290), memory 406 (e.g., the memory 230), wireless charging circuitry 408, and/or a display 410 (e.g., the display module 260).

The electronic device 310 may include communication circuitry 404 (e.g., the communication module 290 of FIG. 2) transmitting/receiving signals using one or two or more antennas (not illustrated) with an external electronic device (e.g., at least one of the server 350 of FIG. 3A, the AP 340, the IoT devices 320a, 320b, 320c, 320d, or the hub device 330). In an embodiment, one or two or more antennas may be implemented as part of the antenna module 297 of FIG. 2. The first electronic device 310 may support, through the communication circuitry 404, at least one of long term evolution (LTE), 5G/new radio (NR), Zigbee, Z-Wave, ultra wide-band (UWB), Wi-Fi, or Bluetooth (e.g., Bluetooth legacy (BT) and/or Bluetooth low energy (BLE)). The communication circuitry 404 may include one or more communication circuits based on LTE, 5G/NR, Zigbee, Z-Wave, UWB, Wi-Fi, BT, and/or BLE.

The electronic device 310 may include a display 410 (e.g., the display module 260 of FIG. 2) for interfacing with the user. The first electronic device 310 may display information related to the IoT service (e.g., status of the IoT devices 320a, 320b, 320c, 320d and/or the hub device 330 and/or control objects of the IoT devices 320a, 320b, 320c, 320d and the hub device 330) through the display 410, and/or receive a user input related to the IoT service (e.g., a command for controlling the IoT devices 320a, 320b, 320c, 320d and/or the hub device 330). In an embodiment, the electronic device 310 may receive the user input through the display 410 or receive a voice user input through an audio module (not illustrated).

The electronic device 310 may include a processor 402 (e.g., the processor 220 of FIG. 2), which may be implemented with one or two or more single-core processors or one or two or more multi-core processors, and memory 406 (e.g., the memory 230 of FIG. 2) storing instructions and data for operation of the first electronic device 310. The memory 406 may store a client application for executing the IoT service, user information, device information, connection information, or related data.

The processor 402 may manage the status and operation of controlled devices (e.g., the IoT devices 320a, 320b, 320c, 320d) and/or the hub device 330 associated with the IoT service, and transmit a control command for at least one controlled device based on a user input to the at least one controlled device directly by the communication circuitry 404 or through the server 340, the AP 340, or the hub device 330.

At least one of the IoT devices 320a, 320b, 320c, 320d or the hub device 330 registered with the server 350 may report its status information to the server 350, the electronic device 310, and/or the hub device 330 periodically or aperiodically. The electronic device 310 may output (e.g., display) status information of at least one IoT device through the display 410.

In an embodiment, the electronic device 310 may be configured to execute a client application for the IoT service by the processor 402. In an embodiment, the client application may include a function of executing a designated action of the IoT devices 320a, 320b, 320c, and 320d or the hub device 330 and a function of displaying information related to a status of the IoT devices 320a, 320b, 320c, and 320d or the hub device 330. In an embodiment, the client application may include a function of creating an automation routine including an execution condition and an action associated with at least one of the IoT devices 320a, 320b, 320c, and 320d and registering the automation routine with the hub device 330 or the server 350.

In an embodiment, the processor 402 may discover an IoT device (e.g., at least one of the IoT devices 320a, 320b, and 320c) or the hub device 330 by receiving advertising data (e.g., a BLE advertising (ADV) signal) through the communication circuitry 404 while the client application is running, and control the display 410 to output information (e.g., a device name, a model name, and/or a device image) of the IoT devices 320a, 320b, and 320c or the hub device 330. The processor 402 may onboard at least one of the IoT devices 320a, 320b, and 320c or the hub device 330 to the server 350 through the displayed information.

In an embodiment, the wireless charging circuitry 408 may be configured to charge a battery (e.g., the battery 289) of the electronic device 310 with power received from an external electronic device (e.g., the hub device 330 having a wireless charging function) through a wired charging signal and/or a wireless charging signal. In an embodiment, the wireless charging circuitry 408 may receive a wireless charging signal generated by the wireless charging circuitry 418 of the hub device 330 while the electronic device 310 is in contact (or proximity) with an external electronic device (e.g., the hub device 330 having a wireless charging function). In an embodiment, the wireless charging signal may include information (e.g., user ID, device ID, and/or user input information) that the hub device 330 intends to transmit. The processor 402 may obtain the information from the wireless charging signal received by the wireless charging circuitry 408. In an embodiment, the processor 402 may transmit, through the wireless charging circuitry 408, a wireless charging signal including information (e.g., user ID, device ID, and/or user input information) that the electronic device 310 intends to transmit to the hub device 330.

FIG. 4B is a block diagram illustrating a configuration of a hub device performing IoT control according to an embodiment of the disclosure.

Referring to FIG. 4B, the hub device 330 may be a device managing an IoT service (e.g., an event-based IoT service) in an IoT network (e.g., the network 300). For example, the IoT network may be a smart home network, and the IoT service may be an automation service. The hub device 330 may be located within the local network 345 or located in an external network (e.g., the Internet). The hub device 330 may include a processor 412, communication circuitry 414, memory 416, wireless charging circuitry 418, and/or an input module 420.

The hub device 310 may include communication circuitry 404 transmitting/receiving signals using one or two or more antennas (not illustrated) with an external electronic device (e.g., at least one of the electronic device 310 of FIG. 3A, the server 350, the AP 340, and/or the IoT devices 320a, 320b, 320c, 320d). The hub device 330 may support, through the communication circuitry 414, at least one of a designated wireless communication technology (e.g., Zigbee, Z-Wave, ultra wide-band (UWB), Wi-Fi, or Bluetooth (e.g., Bluetooth legacy (BT) and/or Bluetooth low energy (BLE)). The communication circuitry 414 may include one or more communication circuits based on Zigbee, Z-Wave, UWB, Wi-Fi, BT, and/or BLE.

The hub device 330 may include an input module 420 for interfacing with the user. In an embodiment, the input module 420 may include at least one button, and the processor 412 may detect pressed or double pressed of the button through the input module 420.

The hub device 330 may include a processor 412, which may be implemented with one or two or more single-core processors or one or two or more multi-core processors, and memory 416 storing instructions and data for operation of the hub device 330. The memory 406 may store applications (e.g., widgets) for executing the IoT service, user information, device information, connection information, or related data. In an embodiment, the memory 416 may store automation routines associated with controlled devices (e.g., the IoT devices 320a, 320b, 320c, 320d) related to the IoT service.

The processor 412 may manage the status and operation of controlled devices (e.g., the IoT devices 320a, 320b, 320c, 320d) associated with the IoT service. The processor 412 may receive command information related to control of at least one (e.g., the IoT device 320a) of the controlled devices from the electronic device 310 and/or the server 350, and transmit a control command generated based on the command information to at least one (e.g., the IoT device 320a) of the controlled devices through the communication circuitry 414. In an embodiment, the control command may be delivered to the corresponding controlled device (e.g., the IoT device 320a) through the AP 340 or directly (e.g., through D2D communication). The command information may indicate an action to be executed by the IoT device 320a designated by the user input, or an automation routine generated by the electronic device 310 or the server 350. In an embodiment, the automation routine may include an execution condition and an action associated with at least one of the IoT devices 320a, 320b, 320c, and 320d.

The IoT devices 320a, 320b, 320c, 320d registered with the server 350 may report their status information to the server 350, the electronic device 310, and/or the hub device 330 periodically or aperiodically. The hub device 330 may report its status information to the server 350 or the electronic device 310 periodically or aperiodically.

In an embodiment, the wireless charging circuitry 418 may be configured to provide power to an external electronic device (e.g., the electronic device 310 having a wireless charging function) through a wireless charging signal, thereby causing a battery (e.g., the battery 289) of the electronic device 310 to be charged. In an embodiment, the wireless charging circuitry 418 may transmit the wireless charging signal while the hub device 310 is in contact (or proximity) with an external electronic device (e.g., the electronic device 310 having a wireless charging function). In an embodiment, the wireless charging signal may include information (e.g., user ID, device ID, and/or user input information) that the hub device 330 intends to transmit. The processor 412 may include the information in the wireless charging signal by the wireless charging circuitry 408. In an embodiment, the processor 412 may receive, through the wireless charging circuitry 418, a wireless charging signal including information (e.g., user ID, device ID, and/or user input information) that the electronic device 310 intends to transmit.

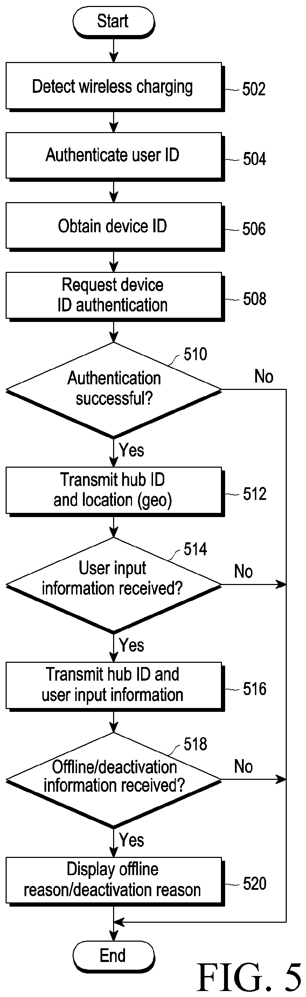

FIG. 5 is a flowchart illustrating an operation of an electronic device notifying movement of a hub device according to an embodiment of the disclosure. According to embodiments, at least one of operations described below may be executed by the processor 402 of the electronic device 310. According to embodiments, the memory 406 of the electronic device 310 may store instructions that, when executed by the processor 402, cause the electronic device 310 to perform at least one of operations to be described below. According to embodiments, at least one of operations to be described below may be omitted, modified, or executed in a different order.

Referring to FIG. 5, in operation 502, the electronic device 310 (e.g., the processor 402) may detect that wireless charging is started. In an embodiment, the electronic device 310 (e.g., the processor 402) may determine that wireless charging has been started based on a wireless charging signal being received through the wireless charging circuitry 408. In an embodiment, the electronic device 310 may start wireless charging by being in contact (or proximity) with a hub device (e.g., the hub device 330) having a wireless charging function.

In operation 504, the electronic device 310 (e.g., the processor 402) may authenticate a user ID (e.g., user account information) of the hub device 330 through the wireless charging circuitry 408. In an embodiment, the electronic device 310 (e.g., the processor 402) may perform user ID authentication by identifying that the hub device 330 shares the same user ID as the electronic device 310. In an embodiment, the electronic device 310 (e.g., the processor 402) may identify that a user ID is included in a wireless signal received from the hub device 330 through the wireless charging circuitry 408, and may perform authentication of the user ID for the hub device 330 based on the user ID being the same as a user ID of the electronic device 310. In an embodiment, operation 504 may be omitted, and the electronic device 310 (e.g., the processor 402) may proceed to operation 506 after wireless charging is started.

In operation 506, the electronic device 310 (e.g., the processor 402) may obtain a device ID of the hub device 330 from a wireless signal received from the hub device 330 through the wireless charging circuitry 408. In an embodiment, the electronic device 310 (e.g., the processor 402) may transmit, through the wireless charging circuitry 408 to the hub device 330, a wireless signal including a device ID request. In an embodiment, the electronic device 310 (e.g., the processor 402) may receive, as a response to the device ID request, a wireless signal including a device ID of the hub device 330 through the wireless charging circuitry 408.

In operation 508, the electronic device 310 (e.g., the processor 402) may transmit, to the server 350 through the communication circuitry 404, a device ID authentication request including the device ID. When the server 350 receives the device ID authentication request, the server 350 may identify whether the hub device 330 corresponding to the device ID is registered with the server 350 for the same user account as the electronic device 310. The electronic device 310 (e.g., the processor 402) may receive, from the server 350 through the communication circuitry 404, a device ID authentication response corresponding to the device ID authentication request.

In operation 510, the electronic device 310 (e.g., the processor 402) may determine whether the hub device 330 has been successfully authenticated based on the device ID authentication response received from the server 350. In an embodiment, the device ID authentication response may include information indicating that the hub device 330 has been successfully authenticated when the server 350 identifies that the hub device 330 is registered with the server 350 for the same user account as the electronic device 310. When the device ID authentication response indicates that the hub device 330 is authenticated, the electronic device 310 (e.g., the processor 402) may proceed to operation 512. When the device ID authentication response does not indicate that the hub device 330 is authenticated, e.g., when the hub device 330 is not registered with the server 350 for the same user account as the electronic device 310, the electronic device 310 (e.g., the processor 402) may terminate operations.

In an embodiment, when the electronic device 310 has authenticated the hub device 330 through the user ID in operation 504, operations 508 and 510 may be omitted, and the electronic device 310 (e.g., the processor 402) may proceed to operation 512 after obtaining the device ID of the hub device 330 in device 506.

In operation 512, the electronic device 310 (e.g., the processor 402) may transmit a hub ID including the device ID obtained in operation 506 and location information indicating a current location (e.g., geographic location (geo)) of the electronic device 310 to the server 350, thereby causing the server 350 to determine that the hub device 330 is present at the same geographic location as the electronic device 310. In an embodiment, the geographic location may include at least one routing address or latitude and longitude.

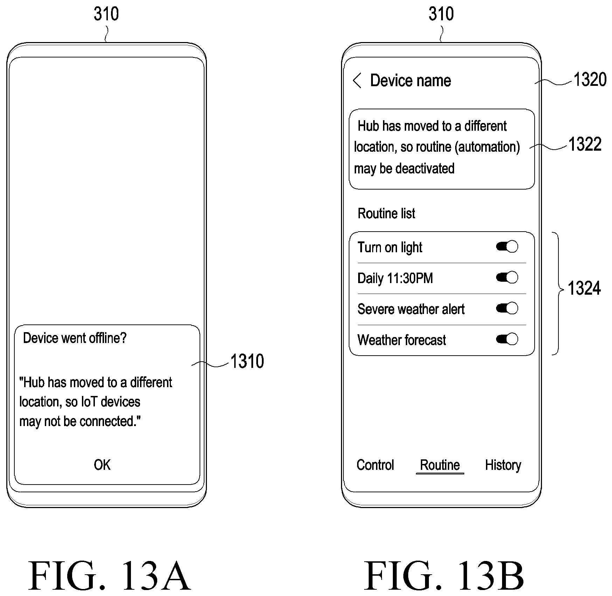

In an embodiment, the server 350 may identify that the hub device 330 has moved based on the hub ID and the location information. The server 350 may identify that the hub device 330 and at least one IoT device (e.g., the hub-connected IoT device 320c and/or 320d) connected with the hub device 330 have entered the offline state based on identifying that the hub device 330 has moved. In an embodiment, the server 350 may transmit connection status information indicating that the hub device 330 and at least one IoT device connected with the hub device 330 have entered the offline state to at least one electronic device (e.g., the electronic device 310 and/or the external electronic device 305) sharing the same user ID as the hub device 330. In an embodiment, the connection status information may include an offline reason of the hub device 330 (e.g., information indicating that the hub device 330 and at least one IoT device connected with the hub device 330 have entered the offline state due to movement of the hub device 330) (e.g., the offline reason information 1310 of FIG. 13A).

In an embodiment, the server 350 may identify that at least one automation routine associated with the hub device 330 and at least one IoT device connected with the hub device 330 is deactivated based on identifying that the hub device 330 has moved. In an embodiment, the server 350 may transmit deactivation information indicating that the at least one automation routine is deactivated to at least one electronic device (e.g., the electronic device 310 and/or the external electronic device 305) sharing the same user ID as the hub device 330. In an embodiment, the deactivation information may include a deactivation reason of the at least one automation routine (e.g., information indicating that the hub device 330 and at least one IoT device connected with the hub device 330 have entered the offline state due to movement of the hub device 330) (e.g., the deactivation reason information 1322 of FIG. 13B).

In operation 514, the electronic device 310 (e.g., the processor 402) may receive a wireless signal including user input information from the hub device 330 while being charged through the hub device 330. In an embodiment, the electronic device 310 (e.g., the processor 402) may identify that user input information is included in the wireless signal received through the wireless charging circuitry 408. In operation 516, the electronic device 310 (e.g., the processor 402) may transmit the user input information together with the hub ID to the server 350, thereby causing the server 350 to execute an automation routine corresponding to the user input information.

In operation 518, the electronic device 310 (e.g., the processor 402) may determine whether connection status information indicating an online/offline state of the hub device 330 and/or deactivation information is received from the server 350 through the communication circuitry 404. When the connection status information and/or the deactivation information is not received, the electronic device 310 (e.g., the processor 402) may terminate operations. When the connection status information and/or the deactivation information is received, the electronic device 310 (e.g., the processor 402) may proceed to operation 520.

In an embodiment, the connection status information may include information related to online or offline of at least one of the hub device 330 or one or more IoT devices (e.g., the hub-connected IoT devices 320d, 320e, 230f) operatively coupled with the hub device 330. In an embodiment, the connection status information may include information related to the hub device 330 moving (e.g., the charging location of the hub device 330 being changed). In an embodiment, the electronic device 310 (e.g., the processor 402) may receive, from the hub device 330 in the offline state, a wireless signal including the connection status information through the wireless charging circuitry 408.

In operation 520, the electronic device 310 (e.g., the processor 402) may display, through the display 410, offline reason information (e.g., the offline reason information 1310 of FIG. 13A) indicating that the hub device 330 and/or at least one IoT device has entered the offline state due to movement of the hub device 330 based on the connection status information and/or the deactivation information. And/or the electronic device 310 (e.g., the processor 402) may display, through the display 410, deactivation reason information (e.g., the deactivation reason information 1322 of FIG. 13B) indicating that at least one automation routine associated with the hub device 330 and/or at least one IoT device is deactivated based on the deactivation information.

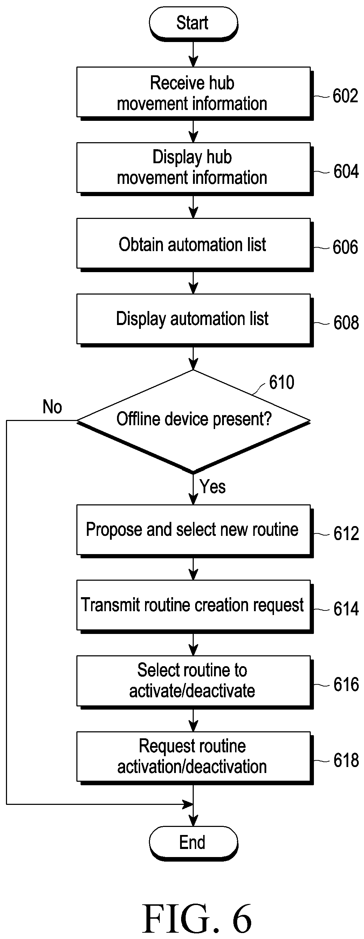

FIG. 6 is a flowchart illustrating an operation of an electronic device managing automation routines according to movement of a hub device according to an embodiment of the disclosure. According to embodiments, at least one of operations described below may be executed by the processor 402 of the electronic device 310. According to embodiments, the memory 406 of the electronic device 310 may store instructions that, when executed by the processor 402, cause the electronic device 310 to perform at least one of operations to be described below. According to embodiments, at least one of operations to be described below may be omitted, modified, or executed in a different order.

Referring to FIG. 6, in operation 602, the electronic device 310 (e.g., the processor 402) may receive a notification indicating hub movement from the server 350. In an embodiment, the notification indicating hub movement may include information indicating that the hub device 330 has moved to a new location, information of the new location to which the hub device 330 has moved, information indicating that a location of the IoT device 320 has been changed, and/or information indicating that the IoT device 320 is newly connected. In operation 604, the electronic device 310 (e.g., the processor 402) may display hub movement information.

In an embodiment, the electronic device 310 may display information (e.g., a pop-up notification) indicating hub movement, execute a client application for the IoT service based on receiving a user input (e.g., touch) through the information, and display the hub movement information through the client application. In an embodiment, the pop-up notification may be displayed while the client application is not running or is running in the background. In an embodiment, the hub movement information may include a guidance phrase, "The hub has come online at a different location." In an embodiment, the hub movement information may include a guidance phrase, "At a new location, IoT device XXX has been connected to the hub."

In operation 606, the electronic device 310 (e.g., the processor 402) may obtain an automation list including one or more automation routines registered by the user from the server 350. In an embodiment, the automation list may include one or more automation routines executable through the hub device 330. In an embodiment, the automation list may include one or more automation routines including an execution condition and/or an action associated with at least one IoT device (e.g., a hub-connected IoT device) directly connected to the hub device 330.

In operation 608, the electronic device 310 (e.g., the processor 402) may display information (e.g., the information 1324 of FIG. 13B) of the automation list through the display 410. In an embodiment, the information of the automation list may indicate, for each automation routine included in the automation list, a name, at least one associated IoT device, an execution condition, and/or an action.

In operation 610, the electronic device 310 (e.g., the processor 402) may determine whether at least one IoT device that has gone offline due to movement of the hub device 330 is present among one or more IoT devices associated with the automation list. In an embodiment, the electronic device 310 (e.g., the processor 402) may identify at least one IoT device (e.g., the IoT devices 320a, 320b) that may no longer connect with the hub device 330 after the hub device 330 has moved among the plurality of IoT devices (e.g., the IoT devices 320a, 320b, 320c, and 320d) located at the local network 345 (e.g., home), and may determine that the identified at least one IoT device has gone offline. When at least one IoT device that has gone offline is present, the electronic device 310 (e.g., the processor 402) may proceed to operation 612. When at least one IoT device that has gone offline is not present, the electronic device 310 (e.g., the processor 402) may terminate operations.

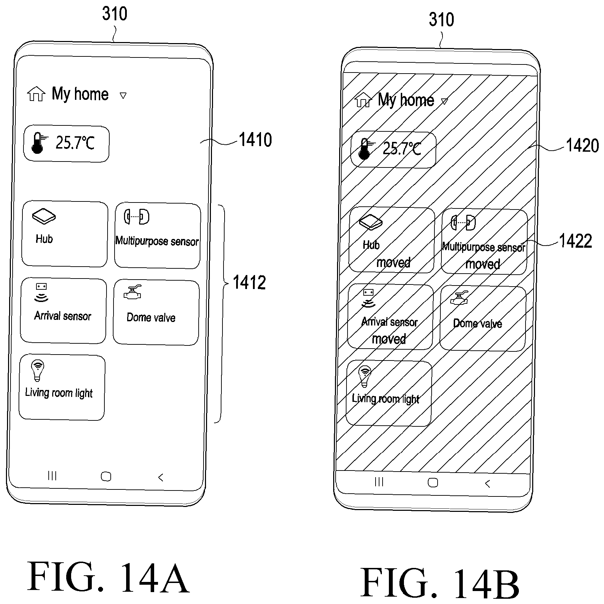

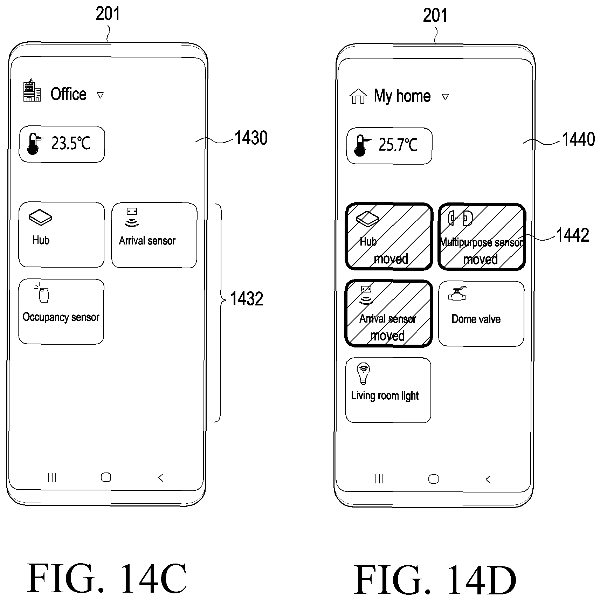

The electronic device 310 (e.g., the processor 402) may determine that at least one automation routine including an execution condition and/or an action associated with the at least one IoT device that has gone offline, among one or more automation routines included in the automation list, is deactivated. In an embodiment, the electronic device 310 (e.g., the processor 402) may include, in the information of the automation list, information indicating activation or deactivation of each automation routine (e.g., the information 1422 of FIG. 14B or the information 1442 of FIG. 14D). In an embodiment, the electronic device 310 (e.g., the processor 402) may display, together with the information of the automation list, information (e.g., shading) indicating that a specific automation routine associated with at least one IoT device directly connected to the hub device 330 is deactivated based on the hub movement information.

In an embodiment, a first automation routine created for the local network 340 may include an execution condition in which user presence is detected by the IoT device 320d (e.g., a temperature sensor) and an action of activating the IoT device 320b (e.g., an air conditioner). When the IoT device 320d is a hub-connected device directly connected to the hub device 330, the IoT device 320d may go offline upon movement of the IoT device 330, and the electronic device 310 may decide to deactivate the first automation routine.

In operation 612, the electronic device 310 (e.g., the processor 402) may display information proposing a new automation routine associated with at least one IoT device (e.g., the IoT devices 320c, 320d) connected with the hub device 330 after movement, and receive a user input selecting the new automation routine. In an embodiment, the electronic device 310 (e.g., the processor 402) may determine a second automation routine including an execution condition and/or an action associated with the IoT devices 320c, 320d that have moved together with the hub device 330 and/or additional IoT devices (e.g., the IoT devices 320e, 320f) connected at the new location, and display information (e.g., the information 1332) proposing the second automation routine. The information may indicate a routine name, an execution condition, and/or an action of the proposed second automation routine.

In operation 614, the electronic device 310 (e.g., the processor 402) may transmit a routine creation request indicating the new automation routine (e.g., the second automation routine) to the server 350 based on receiving a user input selecting to activate the new automation routine. The routine creation request may include information indicating a routine name, an execution condition, and an action of the new automation routine.

In operation 616, the electronic device 310 (e.g., the processor 402) may receive a user input selecting to activate or deactivate at least one automation routine based on displaying the information of the automation list. In an embodiment, the electronic device 310 (e.g., the processor 402) may receive a user input selecting at least one automation routine to maintain in an activated state, delete, or deactivate among one or more automation routines included in the automation list.

In operation 618, the electronic device 310 (e.g., the processor 402) may transmit an activation request, a deletion request, or a deactivation request for the selected at least one automation routine to the server 350.

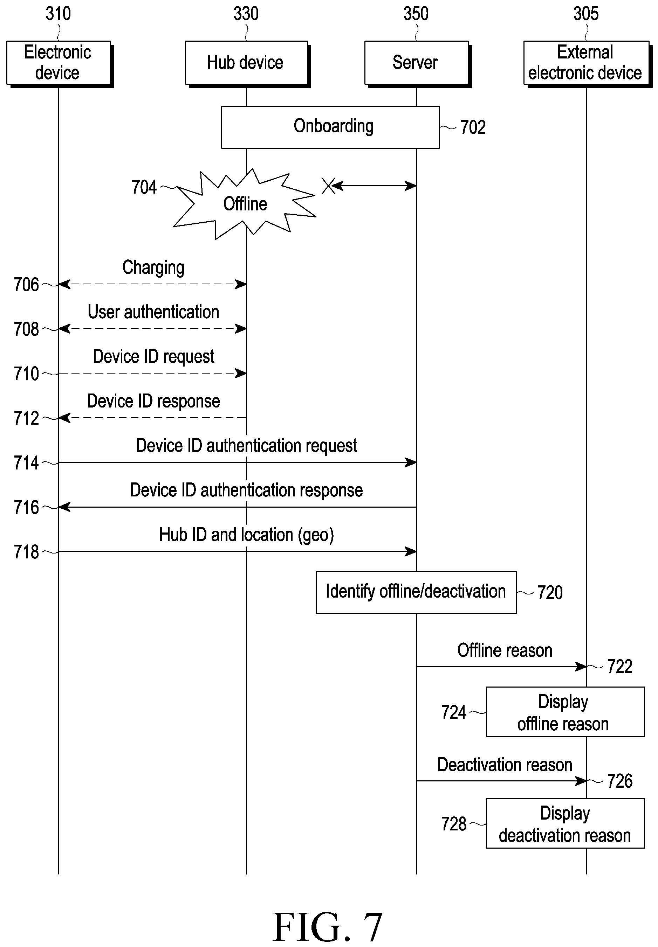

FIG. 7 illustrates a sequence diagram illustrating a procedure for notifying movement of a hub device according to an embodiment of the disclosure. According to embodiments, at least one of operations to be described below may be omitted or modified or executed in a different order.

Referring to FIG. 7, in operation 702, the hub device 330 (e.g., a hub device having a wireless charging function) may be onboarded (e.g., registered with the server 350). In an embodiment, the hub device 330 may connect to the AP 340 using the communication circuitry 414 and then be registered with the server 350 through the AP 340. In an embodiment, the hub device 330 may connect with the AP 340 based on connection information provided from the electronic device 310 and then perform a registration procedure with the server 350. In an embodiment, the hub device 330 may be registered with the server 350 to be associated with a user ID (e.g., user account). The hub device 330 may receive a user ID from the server 350 during the registration procedure and store the user ID in the memory 416.

In an embodiment, the hub device 330 may transmit a connection status (e.g., online state) and location information (e.g., network ID, IP address, and/or geographic location) of the hub device 330 to the server 350 periodically or aperiodically while in a state (e.g., online state) connected with the server 350. In an embodiment, the hub device 330 may control (e.g., transmit a control command to) at least one IoT device (e.g., the IoT device 320a, 320b, 320c, and/or 320d) according to a request from the electronic device 310 and/or the server 350 in the online state. In an embodiment, the hub device 330 may control at least one IoT device according to a designated automation routine while in the online state.

In operation 704, the hub device 330 may detect, through the communication circuitry 414, a state in which connection to the server 350 is disconnected (e.g., an offline state). In an embodiment, the hub device 330 may be disconnected from the server 350 and enter the offline state as the user moves the hub device 330 to a new location (e.g., an office). In an embodiment, the server 350 may detect that the hub device 330 is in the offline state based on information indicating a connection status not being received from the hub device 330, and notify at least one user device (e.g., the electronic device 310) of information indicating a connection status (e.g., offline) of the hub device 330. The electronic device 310 may identify that the hub device 330 is in the offline state based on the notification from the server 350.

In operation 706, the hub device 330 may identify that wireless charging of the electronic device 310 is started by detecting that any external electronic device (e.g., the electronic device 310) contacts the hub device 330. In an embodiment, the hub device 330 may detect, through the wireless charging circuitry 418, that wireless charging of the electronic device 310 is started. Similarly, the electronic device 310 may detect, through the wireless charging circuitry 408, that wireless charging of the electronic device 310 is started.

In operation 708, the electronic device 310 may authenticate the user ID of the hub device 330. In an embodiment, the hub device 330 may include a user ID of the hub device 330 in a wireless signal transmitted through the wireless charging circuitry 418 after wireless charging of the electronic device 310 is started. The user ID may be pre-stored or obtained from the server 350 during the onboarding procedure. In an embodiment, the electronic device 310 may determine that the hub device 330 is authenticated based on the user ID of the hub device 330 received through the wireless charging circuitry 408 being the same as a user ID of the electronic device 310. In an embodiment, the electronic device 310 may include a user ID request in a wireless signal transmitted through the wireless charging circuitry 408 while wirelessly charging. The hub device 330 may include a user ID of the hub device 330 in a wireless signal transmitted through the wireless charging circuitry 418 in response to the user ID request. In an embodiment, operation 708 may be omitted.

In operations 710 and 712, the electronic device 310 may obtain a device ID (e.g., hub ID) of the hub device 330 through the wireless charging circuitry 408. As an embodiment, in operation 710, the electronic device 310 may transmit, through the wireless charging circuitry 408 to the hub device 330, a wireless signal including a device ID request. In operation 712, the hub device 330 may transmit, through the wireless charging circuitry 418 to the electronic device 310, a wireless signal including a device ID response including a device ID (e.g., hub ID) of the hub device 330. In an embodiment, the hub device 330 may include the hub ID in a wireless signal and transmit it to the electronic device 310 through the wireless charging circuitry 418 without a request from the electronic device 310.

In operation 714, the electronic device 310 may transmit, through the communication circuitry 404 to the server 350, a device ID authentication request including the device ID. The server 350 may authenticate the device ID based on the device ID being already registered with the server 350 for the same user account as the electronic device 310. In operation 716, the server 350 may transmit a device ID authentication response indicating that the device ID has been successfully authenticated to the electronic device 310. In an embodiment, the device ID authentication response may include information (e.g., a model name) indicating that the hub device 330 corresponding to the device ID is a wireless charging hub, and the electronic device 310 may regard the device ID as a hub ID.

In operation 718, the electronic device 310 may transmit the device ID (e.g., hub ID) and location information indicating a current location (e.g., geographic location (geo)) of the electronic device 310 to the server 350. The server 350 may determine the received location information as a current location of the hub device 330. The server 350 may identify that the hub device 330 has moved based on the received location information being different from previously stored location information of the hub device 330.

In operation 720, the server 350 may determine connection status information and deactivation information associated with the hub device 330 based on identifying that the hub device 330 has moved. In an embodiment, the server 350 may update a connection status of the hub device 330 and at least one IoT device (e.g., at least one of the IoT devices 320a, 320b, 320c, and/or 320d) associated with the hub device 330 to the offline state. In an embodiment, the server 350 may determine the hub device 330 as being in the offline state and determine a hub-connected IoT device (e.g., the IoT device 320c and/or 320d) associated with the hub device 330 as being in the offline state. In an embodiment, the server 350 may store an offline reason of the hub device 330 and at least one IoT device associated with the hub device 330 as offline due to movement of the hub device 330.

In an embodiment, the server 350 may search for at least one automation routine associated with the hub device 330 and at least one IoT device based on identifying that the hub device 330 has moved, and decide to deactivate the at least one automation routine. In an embodiment, the server 350 may determine the hub device 330 as being in the offline state and deactivate at least one automation routine associated with the hub device 330 and/or a hub-connected IoT device (e.g., the IoT device 320c and/or 320d). In an embodiment, the server 350 may store a deactivation reason of the at least one automation routine as deactivation due to movement of the hub device 330.

In operation 722, the server 350 may transmit connection status information to at least one external electronic device (e.g., the external electronic device 305 and/or the electronic device 310) associated with a user ID of the hub device 330. The connection status information may include a connection status (e.g., offline state) of the hub device 330 and/or offline reason information (e.g., movement of the hub device 330) identified by the server 350. In operation 724, the external electronic device 305 (and/or the electronic device 310) may display information (e.g., a device name and/or a device image) of the hub device 330 that has gone offline and/or offline reason information (e.g., the offline reason information 1310 of FIG. 13A) by receiving the connection status information. In an embodiment, the external electronic device 305 (and/or the electronic device 310) may display a pop-up notification indicating reception of the connection status information, execute a client application in response to a user input, and display the information of the hub device 330 that has gone offline and/or the offline reason information through the client application.

In operation 726, the server 350 may transmit deactivation information to at least one external electronic device (e.g., the external electronic device 305 and/or the electronic device 310) associated with a user ID of the hub device 330. The deactivation information may include deactivation reason information (e.g., movement of the hub device 330) identified by the server 350. In operation 728, the external electronic device 305 (and/or the electronic device 310) may display information (e.g., an automation routine name and/or content) (e.g., the information 1324 of FIG. 13B) of at least one automation routine that has been deactivated and deactivation reason information (e.g., the deactivation reason information 1322 of FIG. 13B) by receiving the deactivation information. In an embodiment, the external electronic device 305 (and/or the electronic device 310) may display a pop-up notification indicating reception of the deactivation information, execute a client application in response to a user input, and display the information of the at least one automation routine that has been deactivated and/or the deactivation reason information through the client application.

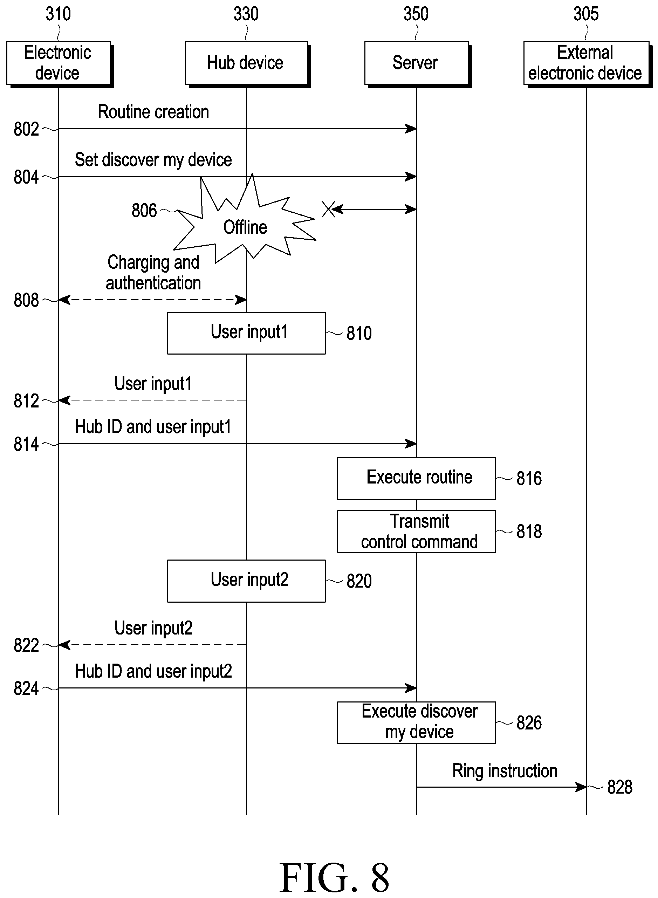

FIG. 8 illustrates a sequence diagram illustrating a procedure for executing an automation routine in an offline state of a hub device according to an embodiment of the disclosure. According to embodiments, at least one of operations to be described below may be omitted or modified or executed in a different order.

Referring to FIG. 8, in operation 802, the electronic device 310 may create an automation routine for at least one IoT device (e.g., at least one of the IoT devices 320a, 320b, 320c, and 320d) and transmit information of the automation routine to the server 350. The automation routine may include an execution condition and an action (e.g., a control command) for controlling the at least one IoT device. In an embodiment, the execution condition may include a user input1 (e.g., button pressed) through the input module 420 of the hub device 330. In an embodiment, the action may include a control command for turning off at least one smart light (e.g., the IoT device 320c). In an embodiment, when the hub device 330 is in the online state, when a button of the hub device 330 is pressed once, the hub device 330 may transmit information indicating that the user input1 is received to the server 350 to cause the server 350 to turn off the smart light.

In operation 804, the electronic device 310 may transmit a discover my device routine for discovering at least one user device (e.g., the electronic device 310 and/or the external electronic device 305) registered for a user ID to the server 350. The discover my device routine may include an execution condition and an action. In an embodiment, the execution condition may include a user input2 (e.g., button double pressed) through the input module 420 of the hub device 330. In an embodiment, the action may include a control command for causing a registered at least one user device to ring. In an embodiment, when the hub device 330 is in the online state, when a button of the hub device 330 is pressed twice, the hub device 330 may transmit information indicating that the user input2 is received to the server 350 to cause the server 350 to ring the at least one user device.

In operation 806, the hub device 330 may detect, through the communication circuitry 414, a state in which connection to the server 350 is disconnected (e.g., an offline state). In an embodiment, the hub device 330 may be disconnected from the server 350 and enter the offline state as the user moves the hub device 330 to a new location (e.g., an office).

In operation 808, the hub device 330 may identify that wireless charging of the electronic device 310 is started by detecting that any external electronic device (e.g., the electronic device 310) contacts the hub device 330. In an embodiment, the hub device 330 may detect, through the wireless charging circuitry 418, that wireless charging of the electronic device 310 is started.

In an embodiment, the hub device 330 may transmit, through the wireless charging circuitry 418 to the electronic device 310, a first wireless signal including a user ID obtained through onboarding while the electronic device 310 is wirelessly charging using the wireless charging function of the hub device 330 (e.g., operation 708). The hub device 330 may receive, through the wireless charging circuitry 418 from the electronic device 310, a second wireless signal including a device ID request (e.g., operation 710) and transmit, through the wireless charging circuitry 418 to the electronic device 310, a third wireless signal including a device ID of the hub device 330 (e.g., operation 712). The electronic device 310 may perform authentication of the hub device 330 based on the device ID (e.g., operations 714 and 716) and transmit a device ID (e.g., hub ID) and location information of the hub device 330 to the server 350 through the communication circuitry 404 (e.g., operation 718).

In operation 810, the hub device 330 may receive the user input1. In an embodiment, the user input1 may include an operation in which at least one button included in the input module 420 is pressed once. In operation 812, the hub device 330 may include information of the user input1 in a wireless signal (e.g., a fourth wireless signal) and transmit it to the electronic device 310 through the wireless charging circuitry 418, based on the user input1 being received in the offline state while the electronic device 310 is wirelessly charging through the hub device 330. The electronic device 310 may identify the user input1 from the wireless signal received through the wireless charging circuitry 408. In operation 814, the electronic device 310 may transmit the hub ID and the user input1 of the hub device 330 to the server 350. The hub ID may be obtained from the hub device 330 through a wireless signal after the electronic device 310 has started wireless charging.

In operation 816, the server 350 may execute a pre-stored automation routine corresponding to the user input1 based on receiving the user input1. In operation 818, the server 350 may transmit a control command causing a designated IoT device (e.g., at least one smart light) to execute a designated action (e.g., turn off) according to the automation routine.

In operation 820, the hub device 330 may receive the user input2. In an embodiment, the user input1 may include an operation in which at least one button included in the input module 420 is pressed twice consecutively. In operation 822, the hub device 330 may include the user input2 in a wireless signal and transmit it to the electronic device 310 through the wireless charging circuitry 418 based on the user input2 being received in the offline state. The electronic device 310 may identify the user input2 from the wireless signal received through the wireless charging circuitry 408. In operation 824, the electronic device 310 may transmit the hub ID and the user input2 of the hub device 330 to the server 350. The hub ID may be obtained from the hub device 330 through a wireless signal after the electronic device 310 has started wireless charging.

In operation 826, the server 350 may execute a discover my device routine corresponding to the user input2 based on receiving the user input2. In operation 828, the server 350 may transmit a control command (e.g., a ring instruction) causing a designated user device (e.g., the external electronic device 305) to execute a designated action (e.g., ring) according to the discover my device routine.

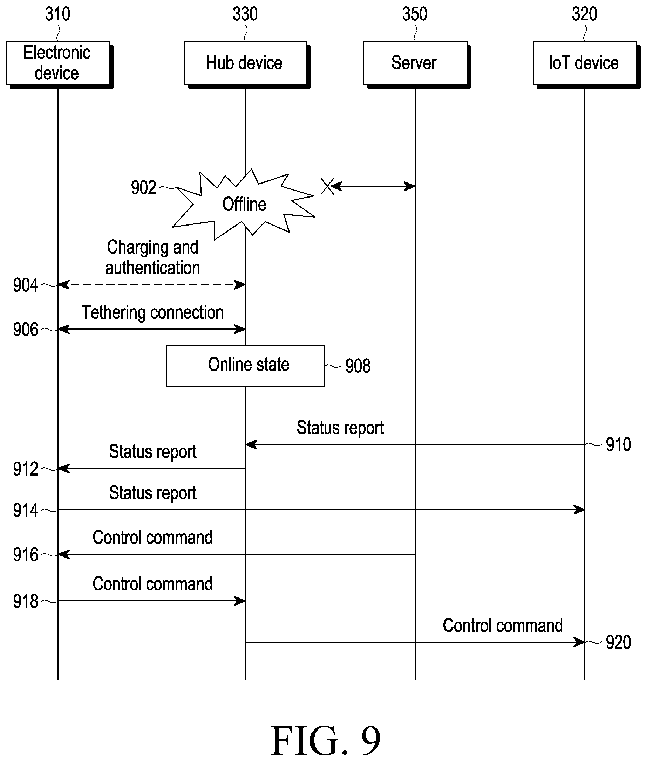

FIG. 9 illustrates a sequence diagram illustrating a procedure for keeping a hub device in an online state through tethering according to an embodiment of the disclosure. According to embodiments, at least one of operations to be described below may be omitted or modified or executed in a different order.

Referring to FIG. 9, in operation 902, the hub device 330 may detect, through the communication circuitry 414, a state in which connection to the server 350 is disconnected (e.g., an offline state). In an embodiment, the hub device 330 may be disconnected from the server 350 and enter the offline state as the user moves the hub device 330 to a new location (e.g., an office).

In operation 904, the hub device 330 may identify that wireless charging of the electronic device 310 is started by detecting that any external electronic device (e.g., the electronic device 310) contacts the hub device 330. In an embodiment, the hub device 330 may detect, through the wireless charging circuitry 418, that wireless charging of the electronic device 310 is started. The electronic device 310 may perform user ID authentication (e.g., operation 708) and/or device ID authentication (e.g., operations 710, 712, 714, and 716) for the hub device 330 while proceeding with wireless charging through the hub device 330.

In operation 906, the electronic device 310 may establish a wireless communication connection (e.g., a tethering connection) with the hub device 330. In an embodiment, establishing the tethering connection may include an operation in which the electronic device 310 operates in a mobile hotspot mode and broadcasts a beacon signal, and the hub device 330 receives the beacon signal, discovers the electronic device 310, and establishes a Wi-Fi connection to the electronic device 310. In an embodiment, the electronic device 310 may provide, for the tethering connection, network connection information (e.g., service set identifier (SSID) and password) used by the electronic device 310 in the mobile hotspot mode to the hub device 330 using a wireless signal through the wireless charging circuitry 408. The hub device 330 may obtain the SSID and the password from the wireless signal received through the wireless charging circuitry 418 and establish a tethering connection to the electronic device 310 using the SSID and the password.

In operation 908, the hub device 330 may enter the online state by connecting to the server 350 through the tethering connection to the electronic device 310. The hub device 330 may control or monitor a status of at least one IoT device (e.g., the IoT device 320) while maintaining the online state using the tethering connection. The hub device 330 may report a connection status (e.g., online) and location information of the hub device 330 to the server 350, and/or report status information of at least one IoT device (e.g., the IoT device 320 directly connected to the hub device 330) to the server 350 using the tethering connection.

In operation 910, the hub device 330 may receive a status report (e.g., sensor data) from the IoT device 320. In an embodiment, the IoT device 320 may transmit the status report to the hub device 330 through a D2D connection to the hub device 330 or a local network. In operations 912 and 914, the hub device 330 may transmit the status report to the server 350 through the electronic device 310 using the tethering connection.

In operations 916 and 918, the hub device 330 may receive a control command for the IoT device 320 from the server 350 through the electronic device 310 using the tethering connection. In operation 920, the hub device 330 may transmit the control command to the IoT device 320. In an embodiment, the hub device 330 may transmit the control command to the IoT device 320 through a D2D connection to the IoT device 320 or a local network.

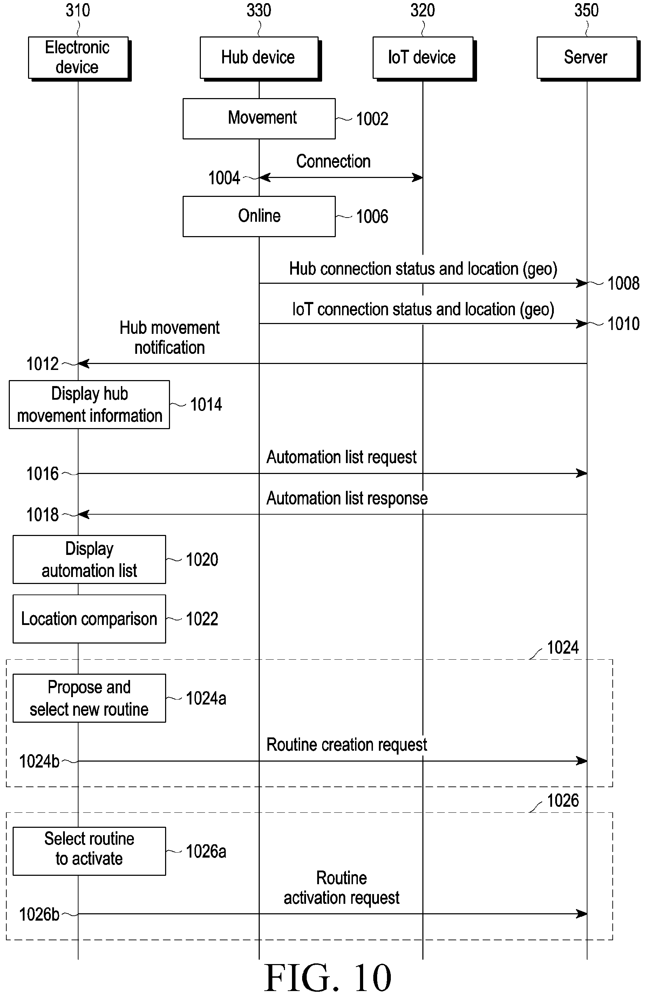

FIG. 10 illustrates a sequence diagram illustrating a procedure for notifying change of an automation routine at a hub device according to an embodiment of the disclosure. According to embodiments, at least one of operations to be described below may be omitted or modified or executed in a different order.

Referring to FIG. 10, in operation 1002, the hub device 330 may be disconnected from the server 350 and enter the offline state as the hub device 330 moves to a new location (e.g., an office) other than the local network 345 (e.g., home). In operation 1004, the hub device 330 may establish a D2D connection to at least one IoT device (e.g., the hub-connected IoT device 320). In an embodiment, the IoT device 320 may be a device that has moved together with the hub device 330 from the local network 345 (e.g., the IoT devices 320c, 320d), or a device newly discovered at a new location (e.g., an office) (e.g., the IoT devices 320e, 320f).

In operation 1006, the hub device 330 may enter the online state by connecting to the server 350 using short-range wireless communication technology or long-range wireless communication technology at the new location (e.g., an office). In an embodiment, the hub device 330 may establish a Wi-Fi connection to an AP at the new location and be connected with the server 350 through the AP. In an embodiment, the hub device 330 may obtain user authentication of the electronic device 310 through the wireless charging circuitry 418 while the electronic device 310 is charging through the hub device 330 and enter the online state through a tethering connection provided by the electronic device 310.

In operation 1008, the hub device 330 may transmit a connection status (e.g., online state) and/or location information (e.g., network ID, IP address, and/or geographic location) of the hub device 330 to the server 350 periodically or aperiodically while in a state (e.g., online state) connected with the server 350. In operation 1010, the hub device 330 may transmit a connection status (e.g., online state) and/or location information (e.g., network ID, IP address, and/or geographic location) of the IoT device 320 directly connected to the hub device 330 to the server 350. In an embodiment, the hub device 330 may update information (e.g., connection status and/or location information) of at least one IoT device (e.g., the IoT device 320) newly discovered at a new location (e.g., an office) to the server 350.

In operation 1012, the server 350 may notify the electronic device 310 of movement of the hub device 330 and/or location change of the IoT device 320. In an embodiment, the server 350 may transmit, to the electronic device 310, information indicating that the hub device 330 has moved to a new location (e.g., an office), location information indicating a new location to which the hub device 330 has moved, information indicating that a location of the IoT device 320 has been changed, and/or information indicating that the IoT device 320 is newly connected.

In operation 1014, the electronic device 310 may display hub movement information through the display 410 based on the notification from the server 350. In an embodiment, the electronic device 310 may display information (e.g., a pop-up notification) indicating hub movement and execute a client application for the IoT service based on receiving a user input (e.g., touch) through the information. The electronic device 310 may display the hub movement information through the client application. In an embodiment, the hub movement information may include a guidance phrase, "Hub xxx has come online at a different location." In an embodiment, the hub movement information may include a guidance phrase, "At a new location, IoT device xyz has been connected to hub xxx."

In operation 1016, the electronic device 310 may transmit an automation list request to the server 350. In operation 1018, the electronic device 310 may receive an automation list including one or more automation routines registered by the user from the server 350. In an embodiment, the automation list may include one or more automation routines created through the hub device 330.

In operation 1020, the electronic device 310 may display information (e.g., the information 1324 of FIG. 13B) of the automation list through the display 410. In an embodiment, the information of the automation list may indicate a name, an execution condition, and/or an action of each automation routine. In operation 1022, the electronic device 310 may compare a previously stored location of the hub device 330 with location information of the hub device 330 received in operation 1012 to determine whether the hub device 330 has moved. When it is determined that the hub device 330 has moved and a new location of the hub device 330 has not been previously stored in the electronic device 310, operation 1024 may be performed.

Operation 1024 may include operation 1024a and operation 1024b. In operation 1024a, the electronic device 310 may display information proposing a new automation routine associated with at least one IoT device connectable at a new location (e.g., an office) of the hub device 330 and receive a user input selecting the new automation routine. In an embodiment, the electronic device 310 may determine a new automation routine including an execution condition and an action associated with a hub-connected IoT device that has moved together with the hub device 330 and an IoT device newly connected at a new location of the hub device 330. In operation 1024b, the electronic device 310 may transmit a routine creation request indicating the new automation routine to the server 350. The routine creation request may include information indicating a routine name, an execution condition, and an action of the new automation routine.

When the hub device 330 has not moved or a new location of the hub device 330 has been previously stored in the electronic device 310, operation 1026 may be performed. Operation 1026 may include operation 1026a and operation 1026b. In operation 1026a, the electronic device 310 may display information indicating at least one automation routine usable at a current location (e.g., an office) of the hub device 330 and receive a user input selecting activation of the at least one automation routine. In an embodiment, the electronic device 310 may display information of at least one automation routine associated with at least one IoT device connectable with the hub device 330 or connected with the hub device 330 at a current location of the hub device 330, among a plurality of automation routines previously registered through the hub device 330. In operation 1026b, the electronic device 310 may transmit a routine activation request requesting activation of the selected automation routine to the server 350. The routine creation request may include information indicating a routine name of the automation routine to be activated.

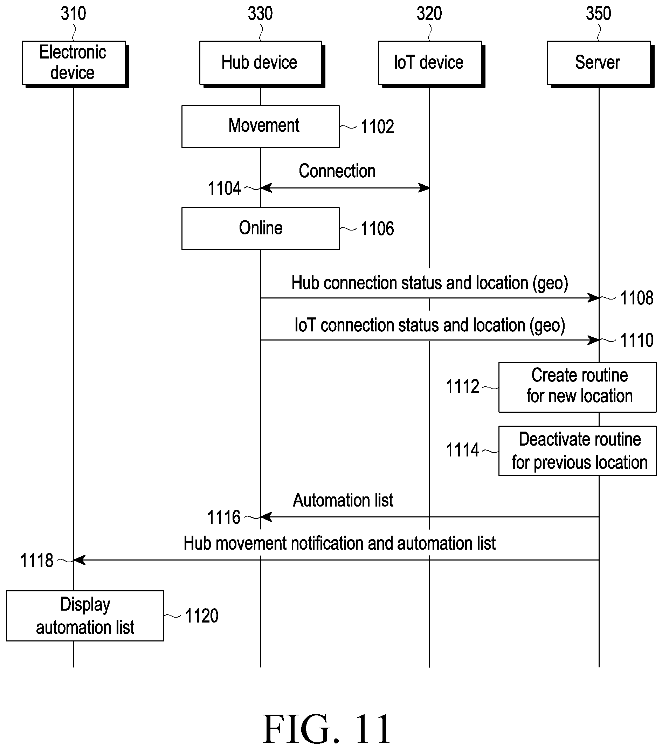

FIG. 11 illustrates a sequence diagram illustrating a procedure for activating or deactivating an automation routine per location according to an embodiment of the disclosure. According to embodiments, at least one of operations to be described below may be omitted or modified or executed in a different order.

Referring to FIG. 11, in operation 1102, the hub device 330 may be disconnected from the server 350 and enter the offline state as the hub device 330 moves to a new location (e.g., an office) other than the local network 345 (e.g., home). In operation 1104, the hub device 330 may establish a D2D connection to at least one IoT device (e.g., the hub-connected IoT device 320). In an embodiment, the IoT device 320 may be a device that has moved together with the hub device 330 from the local network 345, or a device newly discovered at a new location (e.g., an office).

In operation 1106, the hub device 330 may enter the online state by connecting to the server 350 using short-range wireless communication technology or long-range wireless communication technology at the new location (e.g., an office). In an embodiment, the hub device 330 may establish a Wi-Fi connection to an AP at the new location and be connected with the server 350 through the AP. In an embodiment, the hub device 330 may obtain user authentication of the electronic device 310 through the wireless charging circuitry 418 while the electronic device 310 is charging through the hub device 330, and enter the online state by being connected with the server 350 through a tethering connection provided by the electronic device 310.

In operation 1108, the hub device 330 may transmit a connection status (e.g., online state) and/or location information (e.g., network ID, IP address, and/or geographic location) of the hub device 330 to the server 350 periodically or aperiodically while in a state (e.g., online state) connected with the server 350. In operation 1110, the hub device 330 may transmit a connection status (e.g., online state) and/or location information (e.g., network ID, IP address, and/or geographic location) of the IoT device 320 directly connected to the hub device 330 to the server 350. In an embodiment, the hub device 330 may update information (e.g., connection status and/or location information) of at least one IoT device (e.g., the IoT device 320) newly discovered at a new location (e.g., an office) to the server 350.

In operation 1112, the server 350 may create at least one automation routine usable at a new location (e.g., an office) of the hub device 330 based on identifying movement of the hub device 330 and/or location change of the IoT device 320. In an embodiment, the server 350 may create at least one new automation routine associated with at least one IoT device connectable at a new location (e.g., an office) of the hub device 330. In an embodiment, when an automation routine previously registered (e.g., deactivated) for the new location is stored, the server 350 may decide to activate the previously registered automation routine.

In operation 1114, the server 350 may decide to deactivate at least one automation routine associated with a previous location (e.g., home) of the hub device 330 among a plurality of automation routines previously registered through the hub device 330. In an embodiment, the server 350 may deactivate at least one automation routine associated with at least one IoT device that has gone offline due to movement of the hub device 330.

In operation 1116, the server 350 may transmit an automation list including the at least one new automation routine and the at least one deactivated automation routine to the hub device 330. In an embodiment, the automation list may include a newly created automation routine, an activated automation routine, and/or a deactivated automation routine. The hub device 330 may store the automation list and control an associated IoT device (e.g., the IoT device 320) according to at least one automation routine included in the automation list.

In operation 1118, the server 350 may transmit an automation list including the at least one new automation routine and the at least one deactivated automation routine to the electronic device 310. In operation 1120, the electronic device 310 may display information of the automation list through the display 410. In an embodiment, the electronic device 310 (e.g., the processor 402) may include, in the information of the automation list, information indicating activation or deactivation of each automation routine (e.g., the information 1422 of FIG. 14B or the information 1442 of FIG. 14D). In an embodiment, the electronic device 310 (e.g., the processor 402) may display, together with the information of the automation list, information (e.g., shading) indicating that a specific automation routine associated with at least one IoT device directly connected to the hub device 330 is deactivated based on the hub movement information.

In an embodiment, the electronic device 310 may display information (e.g., the information 1420 of FIG. 14C) of at least one deactivated automation routine based on the automation list. In an embodiment, the electronic device 310 may display information (e.g., the information 1422 of FIG. 14B) indicating that at least one IoT device (e.g., the IoT device 320) has moved based on the automation list. In an embodiment, the electronic device 310 may display information (e.g., the information 1430 of FIG. 14C) of at least one automation routine usable at a new location (e.g., an office) of the hub device 330 based on the automation list.

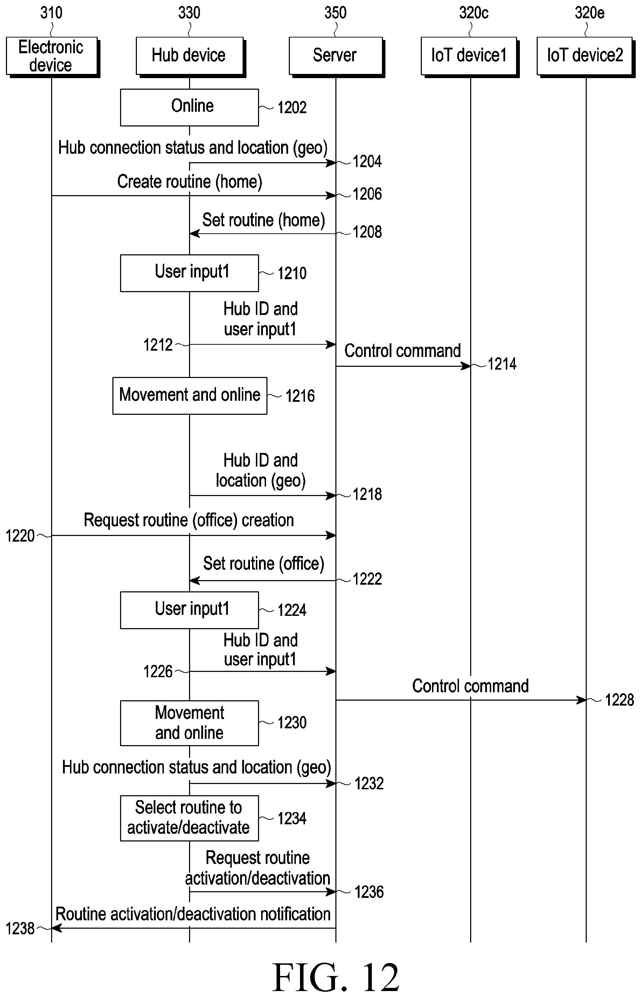

FIG. 12 illustrates a sequence diagram illustrating a procedure for setting an automation routine per location according to an embodiment of the disclosure. According to embodiments, at least one of operations to be described below may be omitted or modified or executed in a different order.

Referring to FIG. 12, in operation 1202, the hub device 330 may be onboarded (e.g., registered with the server 350) and then enter the online state. In operation 1204, the hub device 330 may transmit a connection status (e.g., online) and location information of the hub device 330 to the server 350 periodically or aperiodically while in the online state. In an embodiment, the hub device 330 may report a connection status (e.g., online) and location information (e.g., home) of at least one IoT device (e.g., the hub-connected IoT devices 320c, 320d) connected to the hub device 330 to the server 350 while in the online state. The server 350 may manage the connection status and the location information of the hub device 330 and each IoT device.

In operation 1206, a user device (e.g., the electronic device 310) may transmit, to the server 350, a routine creation request including information of an automation routine (e.g., a home automation routine) to be used at a current location (e.g., home) of the hub device 330 through the hub device 330. In an embodiment, the electronic device 310 may create an automation routine including an execution condition and an action associated with at least one IoT device (e.g., the IoT devices 320a, 320b) installed at a current location (e.g., home) of the hub device 330 and/or at least one IoT device (e.g., the IoT devices 320c, 320d) directly connected to the hub device 330.

In operation 1208, the server 350 may store the automation routine (e.g., the home automation routine) based on the routine creation request and transmit information of the automation routine to the hub device 330. The hub device 330 may store the automation routine (e.g., the execution condition and the action). In an embodiment, the execution condition may include a designated user input1 (e.g., button pressed) through the input module 420 of the hub device 330, and the action may include a control command for at least one IoT device (e.g., the IoT device1 320c) within the current location.

In operation 1210, the hub device 330 may receive the user input1 (e.g., button pressed) designated by the execution condition while in the online state. In operation 1212, the hub device 330 may transmit a hub ID identifying the hub device 330 and information of the user input1 to the server 350. The server 350 may identify an action of an IoT device (e.g., the IoT device1 320c located at home) corresponding to the user input1 from information of an automation routine (e.g., the home automation routine) set for home in operation 1206 based on a current location of the hub device 330 being home. In an embodiment, instead of transmitting information of the user input1 in operation 1212, the hub device 330 may identify an action of the IoT device1 320c corresponding to the user input1 based on the home automation routine and transmit information of the identified action to the server 350.

In operation 1214, the server 350 may transmit a control command instructing to execute the action to the IoT device1 320c. In an embodiment, the server 350 may receive an execution result according to the control command from the IoT device1 320c and transmit the execution result to the hub device 330 and/or the electronic device 310. In an embodiment, the IoT device1 320c is a smart light, and the control command may instruct a turn-off action.

In operation 1216, the hub device 330 may enter the online state by connecting to the server 350 using short-range wireless communication technology or long-range wireless communication technology at the new location after moving to a new location (e.g., an office) other than the local network 345 (e.g., home). In an embodiment, the hub device 330 may establish a Wi-Fi connection to an AP at the new location and be connected with the server 350 through the AP. In an embodiment, the hub device 330 may obtain user authentication of the electronic device 310 through the wireless charging circuitry 418 while the electronic device 310 is charging through the hub device 330, and enter the online state by being connected with the server 350 through a tethering connection provided by the electronic device 310.

In operation 1218, the hub device 330 may transmit a connection status (e.g., online) and location information (e.g., an office) of the hub device 330 to the server 350 at the new location. The hub device 330 may report a connection status (e.g., online) and location information (e.g., an office) of at least one IoT device (e.g., the hub-connected IoT devices 320c, 320d) connected to the hub device 330 to the server 350 while in the online state. The server 350 may manage the connection status (e.g., online) and the location information (e.g., an office) of the hub device 330 and each IoT device.

In operation 1220, a user device (e.g., the electronic device 310) may transmit, to the server 350, a routine creation request including information of an automation routine (e.g., an office automation routine) to be used at a new location (e.g., an office) of the hub device 330 through the hub device 330. In an embodiment, the electronic device 310 may create an automation routine including an execution condition and an action associated with at least one IoT device (e.g., the IoT devices 320e, 320f) installed at a new location (e.g., an office) of the hub device 330 and at least one IoT device (e.g., the IoT devices 320c, 320d) directly connected to the hub device 330.

In operation 1222, the server 350 may store the automation routine (e.g., the office automation routine) based on the routine creation request and transmit information of the automation routine to the hub device 330. The hub device 330 may store the automation routine (e.g., the execution condition and the action). In an embodiment, the execution condition may include a designated user input1 (e.g., button pressed) through the input module 420 of the hub device 330, and the action may include a control command for at least one IoT device (e.g., the IoT device2 320e) within the new location (e.g., an office).

In operation 1224, the hub device 330 may receive the user input1 (e.g., button pressed) designated by the execution condition while in the online state. In operation 1226, the hub device 330 may transmit a hub ID identifying the hub device 330 and information of the user input1 to the server 350. The server 350 may identify an action of an IoT device (e.g., the IoT device2 320e located at an office) corresponding to the user input1 from information of an automation routine (e.g., the office automation routine) set for the office in operation 1220 based on a current location of the hub device 330 being an office. In an embodiment, instead of transmitting information of the user input1 in operation 1226, the hub device 330 may identify an action of the IoT device2 320e corresponding to the user input1 based on the office automation routine and transmit information of the identified action to the server 350.

In operation 1228, the server 350 may transmit a control command instructing to execute the action to the IoT device2 320e. In an embodiment, the server 350 may receive an execution result according to the control command from the IoT device2 320e and transmit the execution result to the hub device 330 and/or the electronic device 310. In an embodiment, the IoT device1 320c is a PC, and the control command may instruct a power on/off.

In an embodiment, the server 350 receives information of the same user input1 from the hub device 330 in operations 1210 and 1224, but may decide to control different IoT devices (e.g., the IoT device1 320c or the IoT device2 320e) according to a current location (home or an office) of the hub device 330. In an embodiment, the hub device 330 receives the same user input1 in operations 1210 and 1224, but may request the server 350 to control different IoT devices (e.g., the IoT device1 320c or the IoT device2 320e) according to a current location (home or an office) of the hub device 330.

In operation 1230, the hub device 330 may enter the online state by connecting to the server 350 through the AP 340 in the local network 345 after returning to the local network 345 (e.g., home). In operation 1232, the hub device 330 may transmit a connection status (e.g., online) and location information (e.g., home) of the hub device 330 to the server 350 at the local network 345.

In operation 1234, the hub device 330 may select automation routines to be activated and/or deactivated based on being connected with the AP 340 of the local network 345. In an embodiment, the hub device 330 may select at least one automation routine to be activated and/or at least one automation routine to be deactivated according to a current location of the hub device 330. In an embodiment, the hub device 330 may decide to deactivate the office automation routine and activate the home automation routine within the local network 345. In an embodiment, the hub device 330 may decide to deactivate the office automation routine and activate the home automation routine based on a user input through the electronic device 310. In an embodiment, the electronic device 310 may deliver, to the hub device 330 through the wireless charging circuitry 408, information instructing to deactivate the office automation routine and activate the home automation routine based on authenticating the hub device 330 and detecting movement of the hub device 330 through the wireless charging circuitry 408.

In operation 1236, the hub device 330 may transmit a routine activation/deactivation request indicating the deactivated office automation routine and/or the activated home automation routine to the server 350. The server 350 may store the deactivated office automation routine and/or the activated home automation routine according to the received information. In operation 1238, the server 350 may transmit a routine activation/deactivation notification indicating the deactivated office automation routine and/or the activated home automation routine to a user device (e.g., the electronic device 310).

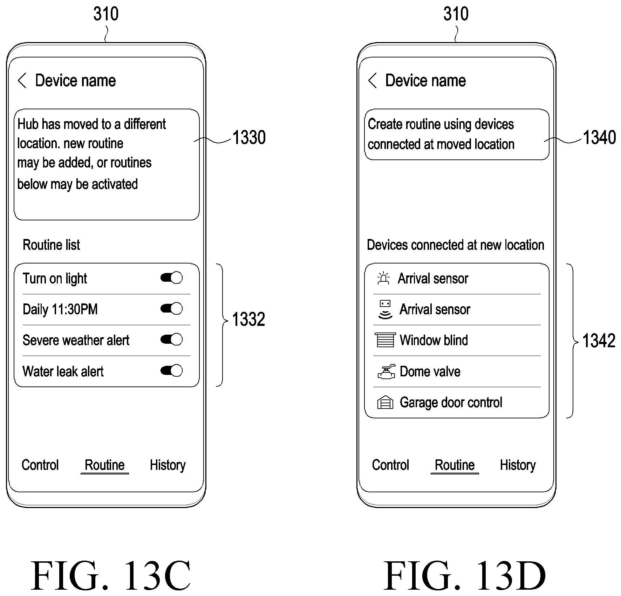

FIG. 13A, FIG. 13B, FIG. 13C, and FIG. 13D illustrate an example of a user interface notifying offline of a hub device according to an embodiment of the disclosure.

Referring to FIG. 13A, the electronic device 310 may display offline reason information 1310 of the hub device 330 through the display 410 based on detecting movement of the hub device 330 having a wireless charging function through the wireless charging circuitry 408. In an embodiment, the electronic device 310 may receive connection status information of the hub device 330 from the server 350 and display the offline reason information 1310 based on an offline reason (e.g., movement of the hub device 330) being included in the connection status information. In an embodiment, the offline reason information 1310 may include a guidance phrase indicating movement of the hub device 330, e.g., "The hub has moved to a different location, so the IoT devices may not be connected."

Referring to FIG. 13B, the electronic device 310 may display, through the display 410, a screen 1320 including routine deactivation information 1322 and information 1324 of an automation list received from the server 350 based on identifying movement of the hub device 330. In an embodiment, the routine deactivation information 1322 may include a guidance phrase indicating that at least one automation routine is deactivated due to movement of the hub device 330, e.g., "The hub has moved to a different location, so the routine (automation) may be deactivated." In an embodiment, the information 1324 of the automation list may include a list of at least one automation routine (e.g., a routine name, an execution condition, and/or an action) executable through the hub device 330. The electronic device 310 may receive a user input selecting activation or deactivation of each automation routine through the information 1324 of the list.

Referring to FIG. 13C, the electronic device 310 may display information 1330 proposing at least one new automation routine executable at a new location of the hub device 330 and information 1332 of an automation list including at least one new automation routine based on identifying movement of the hub device 330. In an embodiment, the information 1330 may include a guidance phrase indicating that routines are added or activated due to movement of the hub device 330, e.g., "The hub has moved to a different location. A new routine may be added, or the routine below may be activated." In an embodiment, the information 1332 of the automation list may include at least one new automation routine (e.g., "water leak alert") proposed by the electronic device 310 for a new location of the hub device 330.

Referring to FIG. 13D, the electronic device 310 may display information 1340 guiding automation routines configured per location and information 1342 indicating at least one IoT device (e.g., the IoT devices 320c, 320d, 320e, 320f) connectable at a new location of the hub device 330 based on identifying movement of the hub device 330. In an embodiment, the information 1340 may include a guidance phrase indicating that there is a connectable IoT device at a moved location, e.g., "Create automation using devices connected at the moved location." In an embodiment, the information 1342 may include a device name, a model name, and/or a device image of at least one IoT device connectable with the hub device 330 at the new location 330.

FIG. 14A, FIG. 14B, FIG. 14C, and FIG. 14D illustrate an example of a user interface notifying deactivation of an automation routine per location according to an embodiment of the disclosure.

Referring to FIG. 14A, the electronic device 310 may display device list information 1410 for a first location (e.g., home) of the hub device 330. In an embodiment, the device list information 1410 may include a list 1412 of objects of one or more IoT devices usable at the first location, e.g., a hub, a multipurpose sensor, an arrival sensor, a dome valve, and a living room light. The electronic device 310 may display a status of each IoT device through each of the objects and/or receive a user input causing an action to be executed.

Referring to FIG. 14B, the electronic device 310 may display deactivated device list information 1420 for indicating that automation of the first location is deactivated based on identifying that the hub device 330 has moved from a first location (e.g., home) to a second location (e.g., an office). In an embodiment, the deactivated device list information 1420 may include shaded objects of each of one or more IoT devices. In an embodiment, the deactivated device list information 1420 may include device movement information 1422 indicating that at least one IoT device (e.g., a hub, a multipurpose sensor, and an arrival sensor) has moved. In an embodiment, the device movement information 1422 may include a guidance phrase indicating that each IoT device has moved, e.g., "moved."

Referring to FIG. 14C, the electronic device 310 may display device list information 1430 for a second location (e.g., an office) based on identifying that the hub device 330 has moved from a first location (e.g., home) to the second location (e.g., an office). In an embodiment, the device list information 1430 may include a list 1432 of objects of one or more IoT devices usable at the second location, e.g., a hub, a multipurpose sensor, an arrival sensor, a dome valve, and a living room light. The electronic device 310 may display a status of each IoT device through each of the objects and/or receive a user input causing an action to be executed.

Referring to FIG. 14D, the electronic device 310 may display device list information 1440 for indicating that automation of the first location is partially deactivated based on identifying that the hub device 330 has moved from a first location (e.g., home) to a second location (e.g., an office). In an embodiment, the device list information 1440 may include a list 1442 of objects of one or more IoT devices usable or not usable at the first location, e.g., a hub, a multipurpose sensor, an arrival sensor, a dome valve, and a living room light. In an embodiment, the electronic device 310 may include device movement information 1442 of at least one IoT device (e.g., a hub, a multipurpose sensor, and an arrival sensor) that has gone offline due to movement. In an embodiment, the device movement information 1442 may include a shaded object of at least one IoT device that has gone offline. In an embodiment, the device movement information 1442 may include a guidance phrase indicating that each IoT device has moved, e.g., "moved."

An electronic device 310 according to an embodiment of the disclosure may include communication circuitry 404, memory 406 storing instructions, wireless charging circuitry 408, and a processor 402 connected with the communication circuitry, the memory and the wireless charging circuitry. The instructions may, when executed by the processor, cause the electronic device to, while the electronic device is being charged from a hub device 330 through the wireless charging circuitry, receive, from the hub device through the wireless charging circuitry, a wireless signal including a device identifier (ID). The instructions may, when executed by the processor, cause the electronic device to transmit the device ID and location information of the hub device to a server through the communication circuitry. The location information of the hub device may include location information of the electronic device. The instructions may, when executed by the processor, cause the electronic device to receive, from the server through the communication circuitry, information on connection status between the hub device and the server. The instructions may, when executed by the processor, cause the electronic device to, based on the information on the connection status, display, through a display 410, information related to location change of the hub device and information related to an online/offline of at least one of the hub device or one or more internet of things (IoT) devices operatively coupled with the hub device.

In an embodiment, the instructions may, when executed by the processor, cause the electronic device to display a pop-up notification indicating that at least one of the hub device or the one or more IoT devices is in an offline state due to movement of the hub device.

In an embodiment, the instructions may, when executed by the processor, cause the electronic device to transmit, through the communication circuitry to the server, a device ID authentication request including the device ID, and receive, from the server through the communication circuitry, a device ID authentication response indicating that the hub device is authenticated.

In an embodiment, the instructions may, when executed by the processor, cause the electronic device to identify at least one hub-connected internet of things (IoT) device connected with the hub device, identify that the at least one hub-connected IoT device is in an offline state based on a location of the hub device being changed, identify that at least one automation routine associated with the at least one hub-connected IoT device is deactivated, and display deactivation reason information indicating that the at least one automation routine is deactivated due to the location of the hub device being changed.

In an embodiment, the instructions may, when executed by the processor, cause the electronic device to, while the electronic device is being charged through the wireless charging circuitry from the hub device, receive, from the hub device through the wireless charging circuitry, user input information indicating that the hub device has received a user input related to a designated action of at least one IoT device, and transmit, to the server through the communication circuitry, the device ID and the user input information to cause the server to control the at least one IoT device to perform the designated action.

In an embodiment, the instructions may, when executed by the processor, cause the electronic device to, while the electronic device is being charged through the wireless charging circuitry from the hub device, establish, through the communication circuitry, a wireless communication connection between the electronic device and the hub device to allow the hub device to connect with the server using the wireless communication connection.

In an embodiment, the information related to the location change of the hub device may indicate that the hub device has moved, and the one or more IoT devices may include hub-connected devices directly connected with the hub device via wire or wirelessly.

In an embodiment, the instructions may, when executed by the processor, cause the electronic device to, based on the location change of the hub device, update or create at least one automation routine, each including an execution condition and an action associated with at least one IoT device.

A hub device 330 according to an embodiment of the disclosure may include communication circuitry 414, memory 416 storing instructions, wireless charging circuitry 418, and a processor 412 connected with the communication circuitry, the memory and the wireless charging circuitry. The instructions may, when executed by the processor, cause the hub device to, after onboarding to a server 350, detect, through the communication circuitry, that the hub device is in an offline state in which connection to the server is disconnected. The instructions may, when executed by the processor, cause the hub device to, based on detecting that an electronic device 310 is being charged using a wireless charging function of the hub device 330, transmit, to the electronic device through the wireless charging circuitry, a first wireless signal including a user ID obtained through the onboarding in the offline state. The instructions may, when executed by the processor, cause the hub device to receive, from the electronic device through the wireless charging circuitry, a second wireless signal including a device ID request. The instructions may, when executed by the processor, cause the hub device to transmit, to the electronic device through the wireless charging circuitry, a third wireless signal including a device ID of the hub device. The instructions may, when executed by the processor, cause the hub device to, while the electronic device is being charged from the hub device through the wireless charging circuitry of the hub device, based on identifying that a user input through an input module of the hub device is received in the offline state, transmit, to the electronic device through the wireless charging circuitry, a fourth wireless signal including information of the user input.

In an embodiment, the instructions may, when executed by the processor, cause the hub device to store, in the memory, an automation routine including an execution condition and an action associated with at least one IoT device, detect movement of the hub device, determine whether the automation routine is usable at a new location to which the hub device has moved and, when the automation routine is not usable, transmit, to the server, information indicating that the automation routine is deactivated.

A method of operating an electronic device 310 according to an embodiment of the disclosure may include an operation 506 of, while the electronic device is being charged (502) from a hub device 330 through wireless charging circuitry 408, receiving, from the hub device through the wireless charging circuitry, a wireless signal including a device identifier (ID). The method may include an operation 512 of transmitting the device ID and location information of the hub device to a server through communication circuitry, and the location information of the hub device may include location information of the electronic device. The method may include an operation 518 of receiving, from the server through the communication circuitry, information on connection status between the hub device and the server. The method may include an operation 520 of, based on the information on the connection status, displaying, through a display 410, information related to location change of the hub device and information related to an online/offline of at least one of the hub device or one or more IoT devices operatively coupled with the hub device.

In an embodiment, the method may include an operation of displaying a pop-up notification indicating that at least one of the hub device or the one or more IoT devices is in an offline state due to movement of the hub device.

In an embodiment, the method may include an operation of transmitting, through the communication circuitry to the server, a device ID authentication request including the device ID, and an operation of receiving, from the server through the communication circuitry, a device ID authentication response indicating that the hub device is authenticated.

In an embodiment, the method may include an operation of identifying at least one hub-connected internet of things (IoT) device connected with the hub device, an operation of identifying that the at least one hub-connected IoT device is in an offline state based on a location of the hub device being changed, an operation of identifying that at least one automation routine associated with the at least one hub-connected IoT device is deactivated, and an operation of displaying deactivation reason information indicating that the at least one automation routine is deactivated due to the location of the hub device being changed.

In an embodiment, the method may include an operation of, while the electronic device is being charged through the wireless charging circuitry from the hub device, receiving, from the hub device through the wireless charging circuitry, user input information indicating that the hub device has received a user input related to a designated action of at least one IoT device, and an operation of transmitting, to the server through the communication circuitry, the device ID and the user input information to cause the server to control the at least one IoT device to perform the designated action.

In an embodiment, the method may, while the electronic device is being charged through the wireless charging circuitry from the hub device, establish, through the communication circuitry, a wireless communication connection between the electronic device and the hub device to allow the hub device to connect with the server using the wireless communication connection.

In an embodiment, the information related to the location change of the hub device may indicate that the hub device has moved, and the one or more IoT devices may include hub-connected devices directly connected with the hub device via wire or wirelessly.

In an embodiment, the method may include an operation of, based on the location change of the hub device, updating or creating at least one automation routine, each including an execution condition and an action associated with at least one IoT device.

A method of operating a hub device 330 according to an embodiment of the disclosure may include an operation 704 of, after onboarding to a server 350, detecting, through communication circuitry 414, that the hub device is in an offline state in which connection to the server is disconnected. The method may include an operation 708 of transmitting, to an electronic device through wireless charging circuitry 418, a first wireless signal including a user ID obtained through the onboarding. The method may include an operation 710 of receiving, from the electronic device through the wireless charging circuitry, a second wireless signal including a device ID request. The method may include an operation 712 of transmitting, to the electronic device through the wireless charging circuitry, a third wireless signal including a device ID of the hub device. The method may include an operation 812 of, while the electronic device is being charged from the hub device through the wireless charging circuitry of the hub device, based on identifying that a user input through an input module of the hub device is received in the offline state, transmitting, to the electronic device through the wireless charging circuitry, a fourth wireless signal including information of the user input.

In a non-transitory computer-readable storage medium storing one or more programs according to an embodiment of the disclosure, the one or more programs may, when executed by at least one processor 402 of an electronic device 310, cause the electronic device to, while the electronic device is being charged from a hub device 330 through wireless charging circuitry 408, receive, from the hub device through the wireless charging circuitry, a wireless signal including a device identifier (ID), authenticate the hub device based on the device ID, wherein the location information of the hub device includes location information of the electronic device, receive, from the server through the communication circuitry, information on connection status between the hub device and the server, and based on the information on the connection status, display, through a display 410, information related to location change of the hub device and information related to an online/offline state of at least one of the hub device or one or more IoT devices operatively coupled with the hub device.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 240) including one or more instructions that are stored in a storage medium (e.g., internal memory 236 or external memory 238) that is readable by a machine (e.g., the electronic device 201). For example, a processor (e.g., the processor 220) of the machine (e.g., the electronic device 201) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (310) comprising:
communication circuitry(404);
memory (406) storing instructions;
wireless charging circuitry (408); and
at least one processor (402) connected with the communication circuitry, the memory and the wireless charging circuitry,
wherein the instructions, when executed by the at least one processor individually or collectively, cause the electronic device to:
while the electronic device is being charged through the wireless charging circuitry from a hub device (330), receive, from the hub device through the wireless charging circuitry, a wireless signal including a device identifier (ID),
transmit the device ID and location information of the hub device through the communication circuitry to a server (350), wherein the location information of the hub device comprises location information of the electronic device,
receive, from the server through the communication circuitry, information on connection status between the hub device and the server, and
based on the information on the connection status, display, through a display (410), information related to location change of the hub device and information related to an online/offline of at least one of the hub device or one or more internet of things (IoT) devices operatively coupled with the hub device.

2. The electronic device of claim 1, wherein the instructions, when executed by the at least one processor individually or collectively, cause the electronic device to:
display a pop-up notification indicating that at least one of the hub device or the one or more IoT devices is in an offline state due to movement of the hub device.

3. The electronic device of claim 1 or 2, wherein the instructions, when executed by the at least one processor individually or collectively, cause the electronic device to:
transmit, through the communication circuitry to the server, a device ID authentication request including the device ID, and
receive, from the server through the communication circuitry, a device ID authentication response indicating that the hub device is authenticated.

4. The electronic device of any one of claims 1 to 3, wherein the instructions, when executed by the at least one processor individually or collectively, cause the electronic device to:
identify at least one hub-connected internet of things (IoT) device connected with the hub device,
identify that the at least one hub-connected IoT device is in an offline state based on a location of the hub device being changed,
identify that at least one automation routine associated with the at least one hub-connected IoT device is deactivated, and
display deactivation reason information indicating that the at least one automation routine is deactivated due to the location of the hub device being changed.

5. The electronic device of any one of claims 1 to 4, wherein the instructions, when executed by the at least one processor individually or collectively, cause the electronic device to:
while the electronic device is being charged through the wireless charging circuitry from the hub device, receive, from the hub device through the wireless charging circuitry, user input information indicating that the hub device has received a user input related to a designated action of at least one IoT device, and
transmit, to the server through the communication circuitry, the device ID and the user input information to cause the server to control the at least one IoT device to perform the designated action.

6. The electronic device of any one of claims 1 to 5, wherein the instructions, when executed by the at least one processor individually or collectively, cause the electronic device to:
while the electronic device is being charged through the wireless charging circuitry from the hub device, establish, through the communication circuitry, a wireless communication connection between the electronic device and the hub device to allow the hub device to connect with the server using the wireless communication connection.

7. The electronic device of any one of claims 1 to 6, wherein the information related to the location change of the hub device indicates that the hub device has moved, and the one or more IoT devices include hub-connected devices directly connected with the hub device via wire or wirelessly.

8. The electronic device of any one of claims 1 to 7, wherein the instructions, when executed by the at least one processor individually or collectively, cause the electronic device to:
based on the location change of the hub device, update or create at least one automation routine, each including an execution condition and an action associated with at least one IoT device.

9. A hub device (330) comprising:
communication circuitry (414);
memory (416) storing instructions;
wireless charging circuitry (418); and
at least one processor (412) connected with the communication circuitry, the memory and the wireless charging circuitry, wherein the instructions, when executed by the at least one processor individually or collectively, cause the hub device to:
after onboarding to a server (350), detect, through the communication circuitry, that the hub device is in an offline state in which connection to the server is disconnected,
based on detecting that an electronic device (310) is being charged using a wireless charging function of the hub device (330), transmit, to the electronic device through the wireless charging circuitry, a first wireless signal including a user ID obtained through the onboarding in the offline state,
receive, from the electronic device through the wireless charging circuitry, a second wireless signal including a device ID request,
transmit, to the electronic device through the wireless charging circuitry, a third wireless signal including a device ID of the hub device, and
while the electronic device is being charged from the hub device through the wireless charging circuitry of the hub device, based on identifying that a user input through an input module of the hub device is received in the offline state, transmit, to the electronic device through the wireless charging circuitry, a fourth wireless signal including information of the user input.

10. The hub device of claim 9, wherein the instructions, when executed by the at least one processor individually or collectively, cause the hub device to:
store, in the memory, an automation routine including an execution condition and an action associated with at least one IoT device,
detect movement of the hub device,
determine whether the automation routine is usable at a new location to which the hub device has moved, and
when the automation routine is not usable, transmit, to the server, information indicating that the automation routine is deactivated.

11. A method of operating an electronic device (310), the method comprising:
while the electronic device is being charged (502) from a hub device (330) through wireless charging circuitry (408), receiving (506), from the hub device through the wireless charging circuitry, a wireless signal including a device identifier (ID);
transmitting (512) the device ID and location information of the hub device to a server through communication circuitry, wherein the location information of the hub device includes location information of the electronic device;
receiving (518), from the server through the communication circuitry, information on connection status between the hub device and the server; and
based on the information on the connection status, displaying (520), through a display (410), information related to location change of the hub device and information related to an online/offline of at least one of the hub device or one or more IoT devices operatively coupled with the hub device.

12. The method of claim 11, comprising:
displaying a pop-up notification indicating that at least one of the hub device or the one or more IoT devices is in an offline state due to movement of the hub device.

13. The method of claim 11 or 12, comprising:
transmitting, through the communication circuitry to the server, a device ID authentication request including the device ID; and
receiving, from the server through the communication circuitry, a device ID authentication response indicating that the hub device is authenticated.

14. The method of any one of claims 11 to 13, comprising:
identifying at least one hub-connected internet of things (IoT) device connected with the hub device;
identifying that the at least one hub-connected IoT device is in an offline state based on a location of the hub device being changed;
identifying that at least one automation routine associated with the at least one hub-connected IoT device is deactivated; and
displaying deactivation reason information indicating that the at least one automation routine is deactivated due to the location of the hub device being changed.

15. A method of operating a hub device (330), the method comprising:
after onboarding to a server (350), detecting, through communication circuitry (414), that the hub device is in an offline state in which connection to the server is disconnected;
based on detecting that an electronic device (310) is being charged using a wireless charging function of the hub device (330), transmitting, to the electronic device through wireless charging circuitry (418), a first wireless signal including a user ID obtained through the onboarding in the offline state;
receiving, from the electronic device through the wireless charging circuitry, a second wireless signal including a device ID request;
transmitting, to the electronic device through the wireless charging circuitry, a third wireless signal including a device ID of the hub device; and
while the electronic device is being charged from the hub device through the wireless charging circuitry of the hub device, based on identifying that a user input through an input module of the hub device is received in the offline state, transmitting, to the electronic device through the wireless charging circuitry, a fourth wireless signal including information of the user input.
